# FASCICULE DE BREVET EUROPEEN

(11) **EP 3 727 910 B1**
(45) Date de publication et mention de la délivrance du brevet: **02.02.2022**
(21) Numéro de dépôt: 18815733.3
(22) Date de dépôt: 14.12.2018
(51) Int. Cl.: B60H 1/00, B60H 1/32

(54) **PROCÉDÉ DE FONCTIONNEMENT D'UN SYSTÈME DE RÉGULATION THERMIQUE D'UN VÉHICULE AUTOMOBILE À PROPULSION ÉLECTRIQUE OU HYBRIDE**
BETRIEBSVERFAHREN EINES THERMISCHEN STEUERSYSTEMS EINES HYBRID- ODER ELEKTROKRAFTFAHRZEUGS
OPERATING PROCESS OF A THERMAL CONTROL SYSTEM OF A HYBRID OR ELECTRIC MOTOR VEHICLE

(30) Priorité: 18.12.2017 FR 1762335
(43) Date de publication de la demande: 28.10.2020
(73) Titulaire: Renault S.A.S., 92100 Boulogne-Billancourt (FR)
(72) Inventeur: YU, Robert, 78280 MONTIGNY LE BRETONNEUX (FR); L'HUILLIER, Jean-Marie, 92130 ISSY LES MOULINEAUX (FR)
(86) Numéro de dépôt international: PCT/EP2018/085036
(87) Numéro de publication internationale: WO 2019/121415

(56) Documents cités:
- EP-A2- 3 012 133
- WO-A1-2011/029538
- WO-A1-2013/005492
- DE-T5-112012 002 441
- DE-T5-112015 005 449
- US-A1- 2014 116 673

## Description

La présente invention concerne le domaine des systèmes de régulation de la température dans un véhicule automobile, notamment à propulsion électrique ou hybride.

Plus particulièrement, l'invention concerne les systèmes de chauffage de l'habitacle comprenant une pompe à chaleur.

L'autonomie des véhicules automobiles à propulsion électrique, entre 200 et 400km, est relativement faible par rapport aux véhicules automobiles à propulsion thermique, entre 700 et 1000km.

La consommation électrique due au conditionnement thermique de l'habitacle (chauffage ou climatisation) vient grever cette autonomie. Elle peut réduire de moitié l'autonomie du véhicule.

Afin d'améliorer l'autonomie des véhicules électriques et hybrides, il est nécessaire de réduire la consommation électrique utilisée pour le conditionnement thermique de l'habitacle du véhicule. Cette réduction de consommation électrique est importante notamment pour un véhicule équipé de peu de batteries, ou pour un véhicule ayant une grande autonomie, équipé d'un nombre important de batteries et devant parcourir de longs trajets.

On connait le document FR 3 004 387 - B1 (Renault) qui décrit un système de régulation thermique de l'habitacle d'un véhicule électrique comprenant une batterie électrique. Le système de régulation thermique utilise les calories emmagasinées dans un accumulateur thermique lors de la charge de la batterie électrique pour chauffer l'air de l'habitacle en mode de roulage du véhicule.

Toutefois, un tel système nécessite l'intégration d'un accumulateur thermique dans le véhicule automobile, ce qui augmente le poids et le volume dudit véhicule.

Une autre solution possible pour réchauffer l'habitacle est d'utiliser une pompe à chaleur, dite « PAC ». Les pompes à chaleur utilisent le même principe de fonctionnement que celui des systèmes de climatisation pour véhicules automobiles. Un fluide mis en circulation dans le système absorbe la chaleur d'une zone pour la libérer ensuite dans une deuxième zone. La pompe à chaleur permet de réchauffer l'habitacle alors que la boucle froide a pour but de le refroidir. L'utilisation d'une pompe à chaleur permet de minimiser la consommation électrique utilisée pour le conditionnement thermique de l'habitacle et ainsi de maximiser l'autonomie du véhicule, tout en réduisant le poids du véhicule.

Les boucles froides et pompes à chaleur classiques comprennent, de manière générale, un compresseur, deux échangeurs de chaleur et un détendeur permettant de prendre les calories à basse température par un premier échangeur et de les rejeter, via le second échangeur dans un environnement ayant une température plus élevée que là où les calories ont été prélevées.

Le compresseur est chargé de mettre en circulation un fluide réfrigérant. L'échangeur fonctionnant en condenseur assure le transfert de chaleur du fluide réfrigérant vers un fluide secondaire, par exemple de l'air. Le détendeur abaisse la pression et la température du fluide réfrigérant. L'échangeur fonctionnant en évaporateur assure le transfert de chaleur du fluide secondaire vers le fluide réfrigérant. L'évaporateur a donc une action inverse du condenseur.

Une pompe à chaleur réversible est un système thermodynamique capable de transporter la chaleur entre deux zones isolées thermiquement. Elle combine alors les propriétés de la boucle froide et de la pompe à chaleur classique.

Dans l'industrie automobile, les pompes à chaleur peuvent être directes auquel cas le condenseur est en contact direct avec l'installation de chauffage, ventilation et climatisation ou indirectes, c'est-à-dire qu'il existe une boucle d'eau entre l'installation et la pompe à chaleur.

Ainsi, en été, la pompe à chaleur réversible fonctionne en mode climatisation et prend les calories dans l'habitacle et les rejette à l'extérieur de l'habitacle et en hiver, la pompe à chaleur fonctionne en mode chauffage et prend les calories à l'extérieur de l'habitacle et les rejette dans l'habitacle.

Toutefois, l'échangeur fonctionnant en évaporateur qui est le plus souvent disposé sur la face avant du véhicule est sujet au givrage, limitant ainsi l'utilisation de la pompe à chaleur par temps humide et lors de longs trajets.

Afin de pallier ce problème, il existe des systèmes complexes de détection du givrage mettant en action un processus d'inversion de la pompe à chaleur afin que celle-ci fonctionne en mode climatisation et réchauffe l'échangeur qui fonctionne alors en condenseur. Toutefois, ceci engendre un dégagement de froid à l'intérieur de l'habitacle le temps de procéder au dégivrage de l'évaporateur, ce qui est particulièrement désagréable pour les passagers du véhicule.

Il existe aussi des radiateurs électriques permettant de dégivrer l'échangeur. Toutefois, une telle solution réduit l'autonomie du véhicule.

On connait du document FR 2 966 387 - A3 (Renault) un procédé de fonctionnement d'un système de régulation de la température d'un habitacle de véhicule automobile dans lequel le système de chauffage de l'habitacle utilise l'énergie thermique d'une batterie électrique du véhicule.

Toutefois, un tel système ne permet pas de chauffer l'habitacle du véhicule lorsque le véhicule roule sans être préalablement branché sur secteur de sorte que la température de la batterie ne permet pas de chauffer l'habitacle du véhicule.

On connait du document WO 2011/029538 A1 un procédé de fonctionnement d'un système de régulation de la température d'un habitacle de véhicule automobile dans lequel on utilise les calories provenant de la chaîne de traction couplée avec un radiateur à eau pour récupérer les calories de l'air extérieur afin de chauffer l'habitacle du véhicule par une pompe à chaleur. Toutefois, un risque de givrage de l'évaporateur existe.

Le but de l'invention est de pallier les inconvénients précités et de proposer un système de régulation thermique d'un véhicule automobile électrique ou hybride capable de garantir le confort thermique de l'habitacle tout en réduisant la consommation électrique de la batterie afin de préserver l'autonomie du véhicule automobile.

Plus particulièrement, l'invention propose une solution permettant de fournir de la chaleur même dans le cas où le véhicule roule sans être préalablement branché sur le secteur afin de recharger l'accumulateur de chaleur (batterie), et/ou dans le cas où le type de roulage est la ville courte durée où la puissance thermique générée par les composantes de chaîne de traction est relativement faible.

L'invention a pour objet un procédé de fonctionnement suivant la revendication 1 et un système de régulation thermique suivant la revendication 14.

L'invention a pour objet un procédé de fonctionnement d'un système de régulation thermique d'un véhicule automobile à propulsion électrique ou hybride comprenant au moins une batterie électrique d'entraînement d'une machine électrique, le système de régulation thermique comprenant un système de pompe à chaleur comportant un évaporateur, un premier condenseur situé en face avant du véhicule, un deuxième condenseur destiné à chauffer l'habitacle du véhicule, un compresseur, un échangeur eau/réfrigérant et un fluide frigorigène ou réfrigérant traversant ces composants circulant dans une boucle de réfrigérant reliant l'évaporateur, les condenseurs, le compresseur et l'échangeur eau/réfrigérant.

Le système de régulation thermique comprend en outre deux boucles d'eau distinctes qui peuvent être reliées entre elles, à savoir une première boucle d'eau fonctionnant à une première température destinée à refroidir la batterie électrique et une deuxième boucle d'eau fonctionnant à une deuxième température destinée à refroidir, soit directement la machine électrique, soit l'huile qui refroidit ensuite la machine électrique. On entend dans ce cas par « machine électrique », l'échangeur huile/eau. La première boucle d'eau comprend un premier radiateur à eau, l'échangeur eau/réfrigérant, une résistance électrique, la batterie électrique et un aérotherme disposé entre l'évaporateur et le deuxième condenseur de la pompe à chaleur et la deuxième boucle d'eau comprenant un radiateur à eau de la chaîne de traction, la machine électrique et le chargeur et les autres composants électriques, ledit radiateur étant disposé en parallèle du premier condenseur et du premier radiateur à eau.

Selon le procédé, lorsque le véhicule roule sans avoir été préalablement branché à une source d'énergie électrique externe pour recharger la batterie, c'est-à-dire que la batterie n'a pas été préchauffée, que la température extérieure est inférieure à une première valeur de seuil, que la batterie a une température inférieure à une quatrième valeur de seuil et qu'il n'y a pas de risque de givrage du radiateur à eau, on utilise les calories provenant de la chaîne de traction couplée avec au moins un des radiateurs à eau pour récupérer les calories de l'air extérieur afin de chauffer l'habitacle du véhicule par la pompe à chaleur.

Selon un mode de réalisation, lorsque le véhicule est raccordé à une source d'énergie électrique externe pour recharger la batterie, que la température extérieure est inférieure à la 2. première valeur de seuil et que la batterie est en charge, la batterie est préchauffée par la résistance électrique et les calories du chargeur jusqu'à une deuxième valeur de seuil de température.

Lorsqu'il y a en plus un besoin de chauffer l'habitacle, la batterie est préchauffée par la résistance électrique et les calories du chargeur et l'habitacle est chauffé par l'aérotherme grâce aux calories du chargeur.

Selon un autre mode de réalisation, lorsque le véhicule est raccordé à une source d'énergie électrique externe pour recharger la batterie, que la température extérieure est inférieure à la première valeur de seuil et que la batterie est chargée, la batterie est chauffée uniquement par la résistance électrique chargeur jusqu'à la deuxième valeur de seuil de température.

Lorsqu'il y a en plus un besoin de chauffer l'habitacle, la batterie est chauffée uniquement par la résistance électrique et l'habitacle est chauffé par l'aérotherme utilisant les calories de la résistance électrique.

Selon un autre mode de réalisation, lorsque la température de la batterie atteint la deuxième valeur de seuil, c'est-à-dire qu'elle a été préchauffée, l'habitacle du véhicule est chauffé par l'aérotherme et la résistance, la batterie n'étant alors plus chauffée.

Selon un autre mode de réalisation, lorsque le véhicule est en roulage, que la température extérieure est inférieure à la première valeur de seuil, que la température de la batterie est supérieure à la quatrième valeur de seuil et qu'il y a un besoin de chauffer l'habitacle du véhicule, l'habitacle est chauffé par la pompe à chaleur en utilisant la chaleur stockée dans la batterie et dans la chaîne de traction

L'habitacle peut également être chauffé par la pompe à chaleur et l'aérotherme en utilisant la chaleur stockée dans la batterie et dans la chaîne de traction.

Selon un autre mode de réalisation, lorsque le véhicule est en roulage, que la température extérieure est supérieure à une sixième valeur de seuil, que la température de la batterie est inférieure à une quatrième valeur de seuil c'est-à-dire que la batterie n'a pas été préchauffée, ou les calories de batterie avaient été déjà utilisées et qu'il y a un besoin de chauffer l'habitacle du véhicule, l'habitacle est chauffé par l'aérotherme en utilisant les calories de la chaîne de traction sans utiliser les calories de batterie.

Lorsque la température extérieure est inférieure à une troisième valeur de seuil et qu'il n'y pas besoin de refroidir l'habitacle du véhicule, la batterie et les composants de la chaîne de traction sont refroidis par les deux boucles d'eau séparées avec leur propre radiateur à eau. Il n'y a pas besoin, dans ce cas, d'actionner la pompe à chaleur, ce qui réduit considérablement la consommation électrique du système de régulation thermique.

Selon un autre mode de réalisation, lorsque le véhicule est raccordé à une source d'énergie électrique externe pour recharger la batterie, que la température extérieure est supérieure à une cinquième valeur de seuil et que la batterie est chargée, la batterie est refroidie par l'échangeur et le chargeur est refroidi par le radiateur de la chaîne de traction.

Lorsqu'il y a en plus un besoin de refroidir l'habitacle, la batterie est refroidie par l'échangeur et le chargeur est refroidi par le radiateur de la chaîne de traction et l'habitacle du véhicule par la pompe à chaleur.

Selon un autre mode de réalisation, lorsque le véhicule est en roulage, que la température extérieure est supérieure à une cinquième valeur de seuil, la batterie est refroidie par l'échangeur, le chargeur est refroidi par le radiateur de la chaîne de traction et l'habitacle du véhicule par la pompe à chaleur.

La première valeur de seuil est, par exemple, comprise entre -30°C et 0°C, par exemple égale à -15°C.

La deuxième valeur de seuil est, par exemple, égale à 35 °C.

La troisième valeur de seuil est, par exemple comprise entre 20°C et 40°C, par exemple égale à 30°C.

La quatrième valeur de seuil est, par exemple comprise entre 0°C et 10°C, par exemple égale à 5°C.

La cinquième valeur de seuil est, par exemple comprise entre 40°C et 50°C, par exemple égale à 45°C.

La sixième valeur de seuil est, par exemple comprise entre 0°C et 20°C, par exemple égale à 5°C.

Selon un second aspect, l'invention concerne un système de régulation thermique d'un véhicule automobile à propulsion électrique ou hybride comprenant au moins une batterie électrique d'entraînement d'une machine électrique.

Le système de régulation thermique comprend un système de pompe à chaleur comportant un évaporateur, un premier condenseur situé en face avant du véhicule, un deuxième condenseur destiné à chauffer l'habitacle du véhicule, un compresseur, un échangeur eau/réfrigérant et un fluide frigorigène ou réfrigérant traversant ces composants circulant dans une boucle de réfrigérant reliant l'évaporateur, les condenseurs, le compresseur et l'échangeur eau/réfrigérant.

Le système de régulation thermique comprend en outre deux boucles d'eau distinctes qui peuvent être reliées entre elles, à savoir une première boucle d'eau fonctionnant à une première température destinée à refroidir la batterie électrique et une deuxième boucle d'eau fonctionnant à une deuxième température destinée à refroidir la machine électrique. La première boucle d'eau comprend un premier radiateur à eau, l'échangeur eau/réfrigérant, une résistance électrique, la batterie électrique et un aérotherme disposé entre l'évaporateur et le deuxième condenseur de la pompe à chaleur et la deuxième boucle d'eau comprenant un radiateur à eau de la chaine de traction, la machine électrique et le chargeur, ledit radiateur étant disposé en parallèle du premier condenseur et du premier radiateur à eau.

D'autres buts, caractéristiques et avantages de l'invention apparaîtront à la lecture de la description suivante, donnée uniquement à titre d'exemple non limitatif, et faite en référence aux dessins annexés sur lesquels :
- la figure 1 représente schématiquement un système de régulation thermique d'un véhicule automobile selon l'invention;
- les figures 2 à 18 illustrent le système de régulation thermique de la figure 1 selon des modes de fonctionnement distincts ;
- la figure 19 illustre un organigramme d'un mode de mise en oeuvre d'un procédé de fonctionnement du système de régulation thermique de la figure 1.

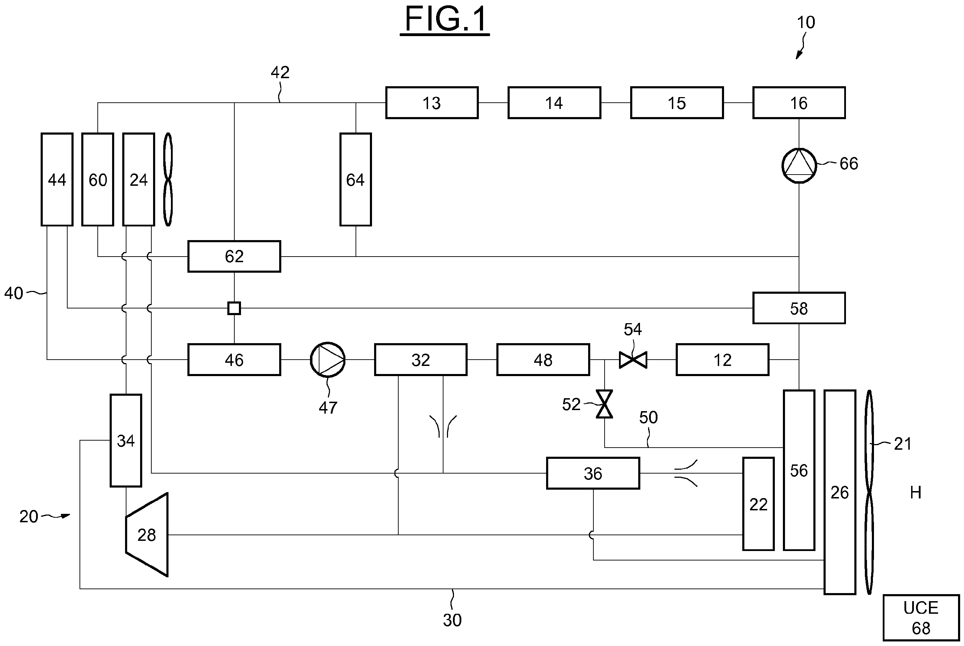

Tel qu'illustré à la figure 1, un système de régulation thermique 10 d'un véhicule automobile à propulsion électrique ou hybride (non représenté) comprenant une batterie électrique 12 pour alimenter une machine électrique 13 reliée en série à un chargeur 14, à un onduleur 15 et à un convertisseur de courant continu 16.

Le système de régulation thermique 10 comprend un système de pompe à chaleur 20 intégrant une double fonction, d'une part de chauffage de l'habitacle H du véhicule et d'autre part de refroidissement de l'habitacle H. Le système de pompe à chaleur 20 est destiné à être intégré dans une installation de chauffage et/ou de climatisation, dite « HVAC » (non représentée) comprenant un motoventilateur 21 pour souffler l'air à l'intérieur de l'habitacle H.

Le système de pompe à chaleur 20 comprend un évaporateur 22, un premier condenseur 24 situé en face avant du véhicule, un deuxième condenseur 26 destiné à chauffer l'habitacle H, un compresseur 28, un fluide frigorigène ou réfrigérant (non représenté) traversant ces composants circulant dans un conduit 30 formant une boucle dite de réfrigérant reliant l'évaporateur 22, les condenseurs 24, 26 et le compresseur 28.

Le système de pompe à chaleur 20 comprend également un échangeur eau/réfrigérant 32 et deux vannes à trois voies 34, 36. La première vanne trois voies 34 est reliée au premier condenseur 24, au compresseur 28 et au deuxième condenseur 26 et la deuxième vanne trois voies 36 est reliée en entrée au conduit (non référencé) reliant le premier condenseur 24 et l'échangeur eau/réfrigérant 32, et en sortie à l'évaporateur 22 et au deuxième condenseur 26.

Le système de régulation thermique 10 comprend en outre deux boucles d'eau 40, 42, à savoir une première boucle d'eau 40 fonctionnant à une première température dite basse, par exemple de l'ordre de 10°C destinée à refroidir la batterie électrique 12 et une deuxième boucle d'eau 42 fonctionnant à une deuxième température dite haute, par exemple de l'ordre de 70°C destinée à refroidir la machine électrique 13.

La première boucle d'eau 40 comprend, dans l'ordre, un premier radiateur à eau 44, une vanne trois voies 46, une pompe 47, l'échangeur eau/réfrigérant 32, une résistance électrique 48 de type CTP, une boucle bypass 50 contenant deux vannes deux voies 52, 54, la batterie électrique 12 et un deuxième radiateur à eau ou aérotherme 56, et une vanne trois voies 58. L'aérotherme 56 est disposé entre l'évaporateur 22 et le deuxième condenseur 26. Les deux vannes 3 voies 46, 58 permettent de relier les deux boucles d'eau 40, 42. Telles qu'illustrées les deux boucles d'eau 40, 42 sont reliées entre elles. En variante, on pourrait prévoir qu'elles soient totalement indépendantes l'une de l'autre.

La deuxième boucle d'eau 42 comprend, dans l'ordre, un radiateur à eau de la chaîne de traction 60, une vanne quatre voies 62, un vase d'expansion 64, une pompe 66, la machine électrique 13, le chargeur 14, l'onduleur 15 et le convertisseur CC. Le radiateur 60, le vase d'expansion 64 et la pompe 66 sont disposés en parallèle.

Le premier condenseur 24 de la boucle de réfrigérant est disposé en parallèle du premier radiateur 44 et du radiateur 60 respectivement de la première et deuxième boucle d'eau, par exemple après le radiateur 60. En variante, on pourrait prévoir que le condenseur 24 soit disposé entre le radiateur 60 de la deuxième boucle d'eau 42.

Le système de régulation thermique 10 comprend également une unité de commande électronique UCE 68 comprenant des moyens de mise en oeuvre du procédé de fonctionnement du système de régulation thermique. L'unité de commande électronique 68 pilote le fonctionnement de la pompe à chaleur 20, du groupe motoventilateur 21, des différentes pompes de circulation 47, 66, l'ouverture et la fermeture des différentes vannes 34, 36, 46, 54, 52, 58, 62 afin de faire circuler le fluide réfrigérant dans la boucle de la pompe à chaleur ou faire circuler l'eau dans l'une ou les boucles d'eau 40, 42, ainsi que la résistance électrique 48 et l'aérotherme 56.

L'unité de commande électronique 68 reçoit les instructions de l'utilisateur du véhicule, notamment en terme de chauffage ou climatisation de l'habitacle du véhicule, mais reçoit également les informations de différents capteurs (non représentés), notamment un capteur détectant que le véhicule est branché sur réseau à une source d'énergie électrique externe pour recharger la batterie via le chargeur 14, d'un capteur de vitesse longitudinale du véhicule permettant de détecter quand le véhicule roule, d'un capteur de température de la batterie, d'un capteur de température de l'habitacle, d'un capteur de température extérieure.

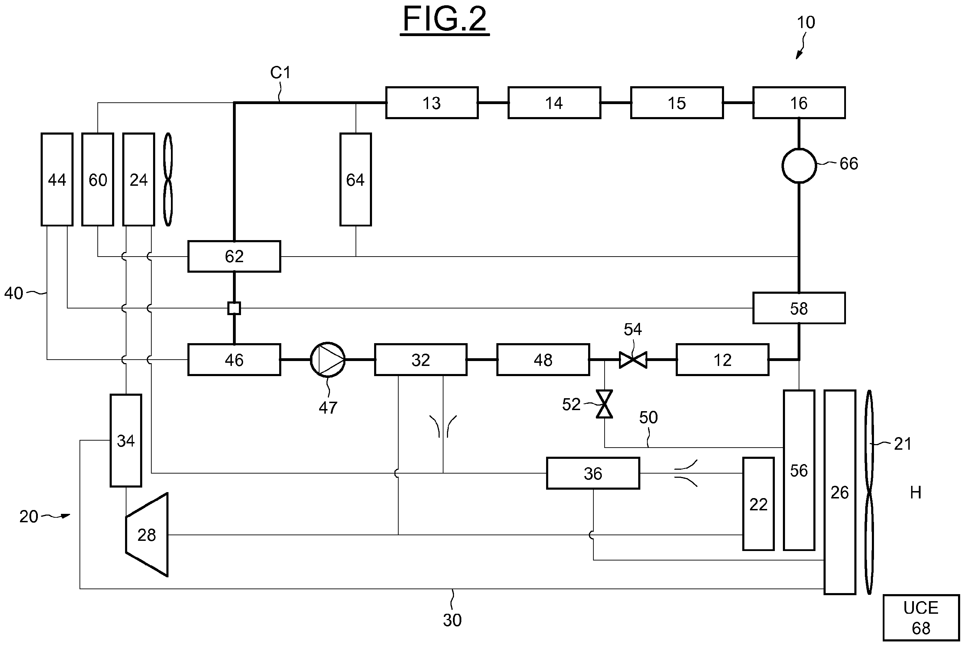

Les figures 2 à 18 illustrent différents modes de fonctionnement du système de régulation thermique de la figure 1, dans lesquelles le circuit actif est mis en gras.

Les figures 2 à 6 illustrent cinq modes de fonctionnement du système de régulation thermique 10 lorsque le véhicule est branché sur réseau à basse température ambiante.

Dans la figure 2, l'eau circule notamment à travers le chargeur 14, la pompe 47 de la première boucle d'eau 40, la résistance électrique 48, la batterie 12 et la pompe 66 de la deuxième boucle d'eau 42. Ainsi, lorsque le véhicule est branché sur réseau, que la température extérieure est inférieure à une première valeur de seuil S1, par exemple comprise entre -30°C et 0°C, par exemple égale à -15°C, et que la batterie 12 est en recharge, la batterie 12 est préchauffée, non seulement par la chaleur dégagée à l'intérieure de batterie, mais aussi par la résistance électrique 48 et les calories du chargeur 14.

Dans ce premier mode M1 de régulation thermique, on actionne les pompes 47 et 66, la résistance électrique 48 et le chargeur 14 et on ouvre les vannes 46, 54, 58 et 62 de manière à faire circuler l'eau dans le circuit C1 représenté en gras sur la figure 2.

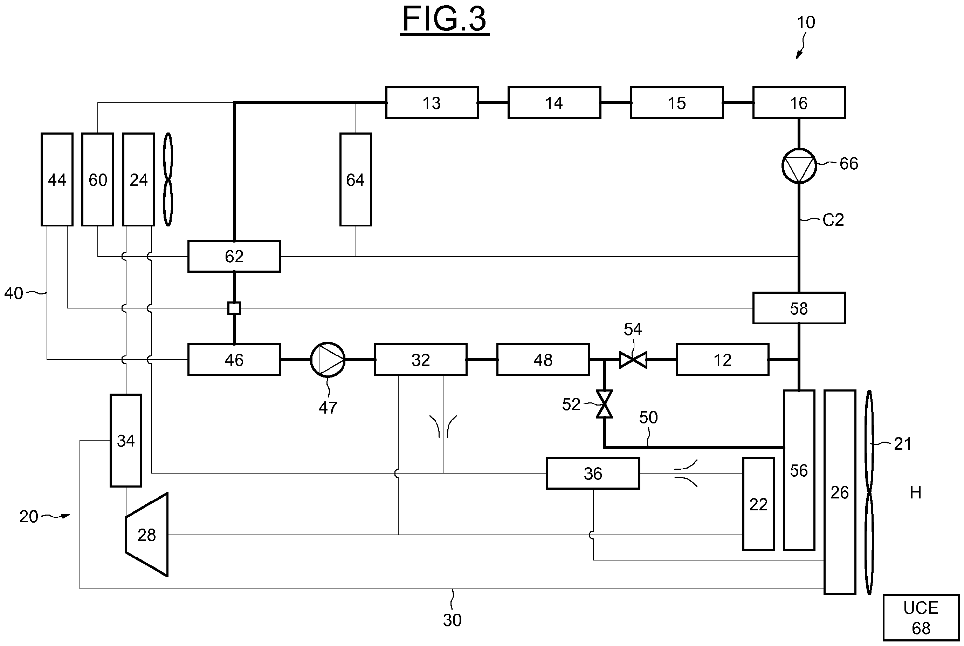

Dans la figure 3, l'eau circule notamment à travers le chargeur 14, la pompe 47 de la première boucle d'eau 40, la résistance électrique 48, la batterie 12, la pompe 66 de la deuxième boucle d'eau 42 et l'aérotherme 56. Ainsi, lorsque le véhicule est branché sur réseau, que la température extérieure est inférieure à la première valeur de seuil S1, que la batterie 12 est en charge et qu'il y a un besoin de chauffer l'habitacle du véhicule, la batterie 12 est préchauffée par la résistance électrique 48 et les calories du chargeur 14 et l'habitacle est chauffé par l'aérotherme grâce aux calories du chargeur et de la résistance électrique 48.

Dans ce deuxième mode M2 de régulation thermique, on actionne les pompes 47 et 66, la résistance électrique 48 et le chargeur 14 et on ouvre les vannes 46, 52, 54, 58, 62 de manière à faire circuler l'eau dans le circuit C2 représenté en gras sur la figure 3.

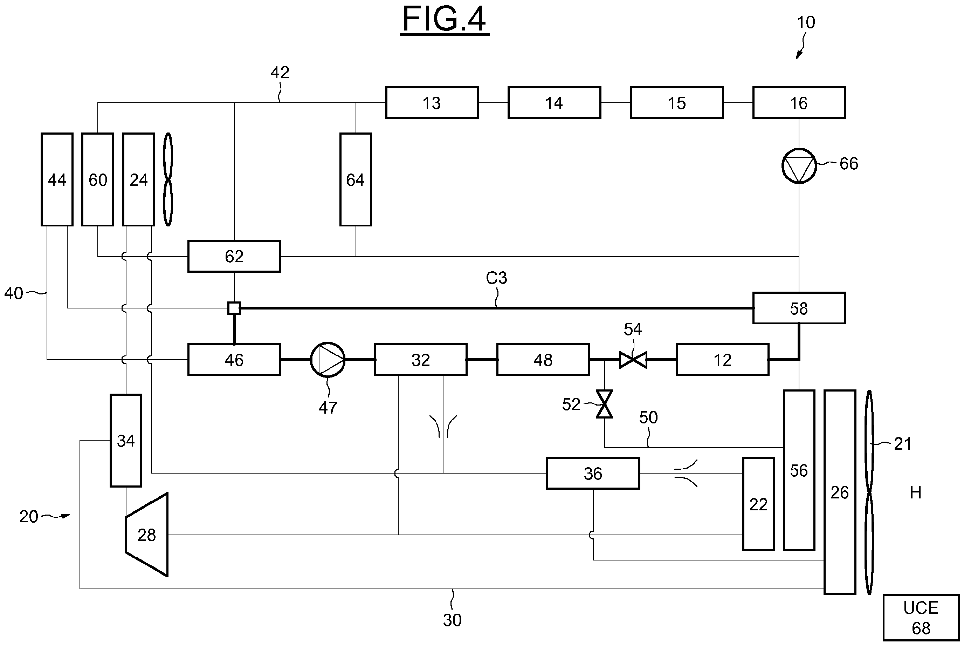

Dans la figure 4, l'eau circule notamment à travers la pompe 47 de la première boucle d'eau 40, la résistance électrique 48 et la batterie 12. Ainsi, lorsque le véhicule est branché sur réseau, que la température extérieure est inférieure à la première valeur de seuil S1, et que la batterie 12 est chargée, la batterie 12 est chauffée uniquement par la résistance électrique 48 jusqu'à un deuxième seuil de température S2. La deuxième valeur de seuil S2 est, par exemple, égale à 35 °C.

Dans ce troisième mode M3 de régulation thermique, on actionne la pompe 47 de la première boucle d'eau 40 et la résistance électrique 48 et on ouvre les vannes 46, 54 et 58 de manière à faire circuler l'eau dans le circuit C3 représenté en gras sur la figure 4.

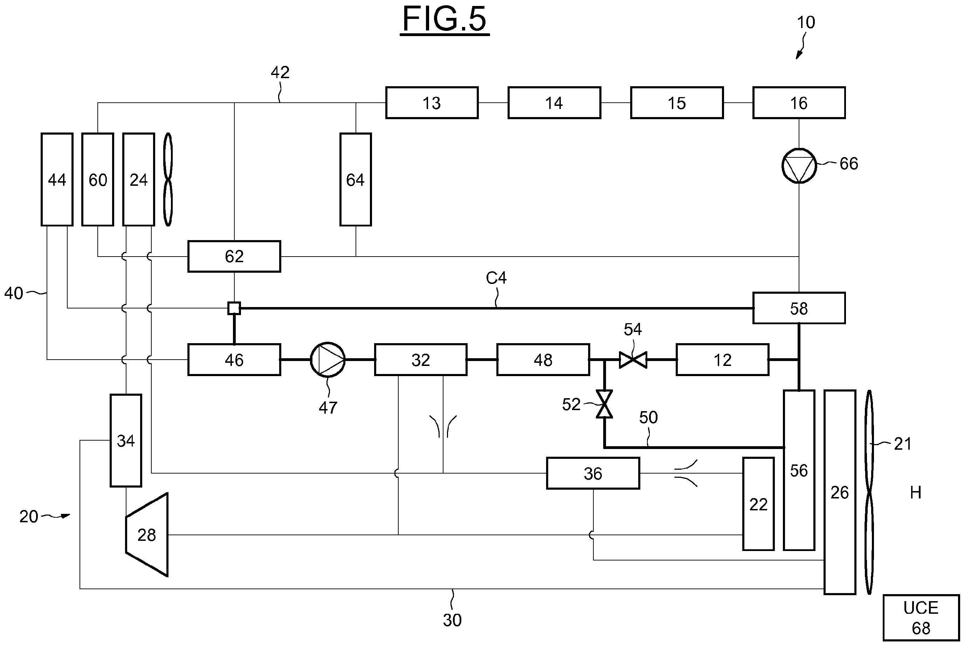

Dans la figure 5, l'eau circule notamment à travers la pompe 47 de la première boucle d'eau 40, la résistance électrique 48, la batterie 12 et l'aérotherme 56. Ainsi, lorsque le véhicule est branché sur réseau, que la température extérieure est inférieure à la première valeur de seuil S1, que la batterie 12 est chargée et qu'il y a un besoin de chauffer l'habitacle du véhicule, la batterie 12 est chauffée uniquement par la résistance électrique 48 et l'habitacle H est chauffé par l'aérotherme.

Dans ce quatrième mode M4 de régulation thermique, on actionne la pompe 47 de la première boucle d'eau 40 et la résistance électrique 48 et on ouvre les vannes 46, 54 et 58 de manière à faire circuler l'eau dans le circuit C4 représenté en gras sur la figure 5.

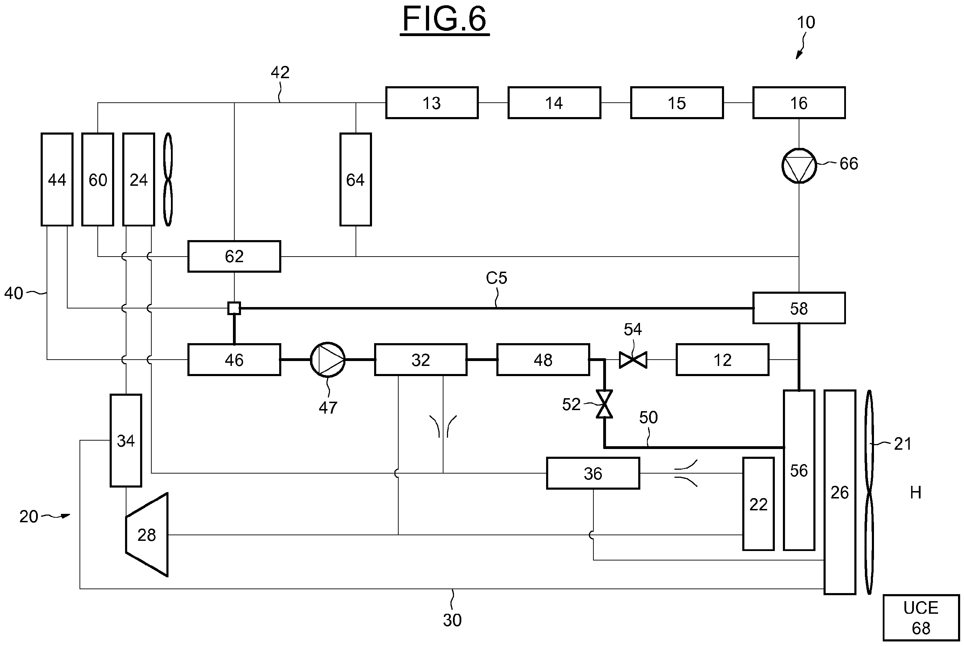

Dans la figure 6, on ferme la vanne 54 de manière à ce que l'eau ne circule plus par la batterie par rapport à la figure 5.

L'eau circule notamment à travers la pompe 47 de la première boucle d'eau 40, la résistance électrique 48 et l'aérotherme 56. Ainsi, lorsque le véhicule est branché sur réseau, que la température extérieure est inférieure à la première valeur de seuil S1, que la batterie 12 est chargée et que la température TBat de la batterie est supérieure à la deuxième valeur de seuil S2, par exemple égale à 35°C, l'habitacle H du véhicule est chauffé par l'aérotherme et la résistance 48.

Dans ce cinquième mode M5 de régulation thermique, on actionne la pompe 47 de la première boucle d'eau 40 et la résistance électrique 48 et on pilote les vannes 46, 54 et 58 de manière à faire circuler l'eau dans le circuit C4 représenté en gras sur la figure 6.

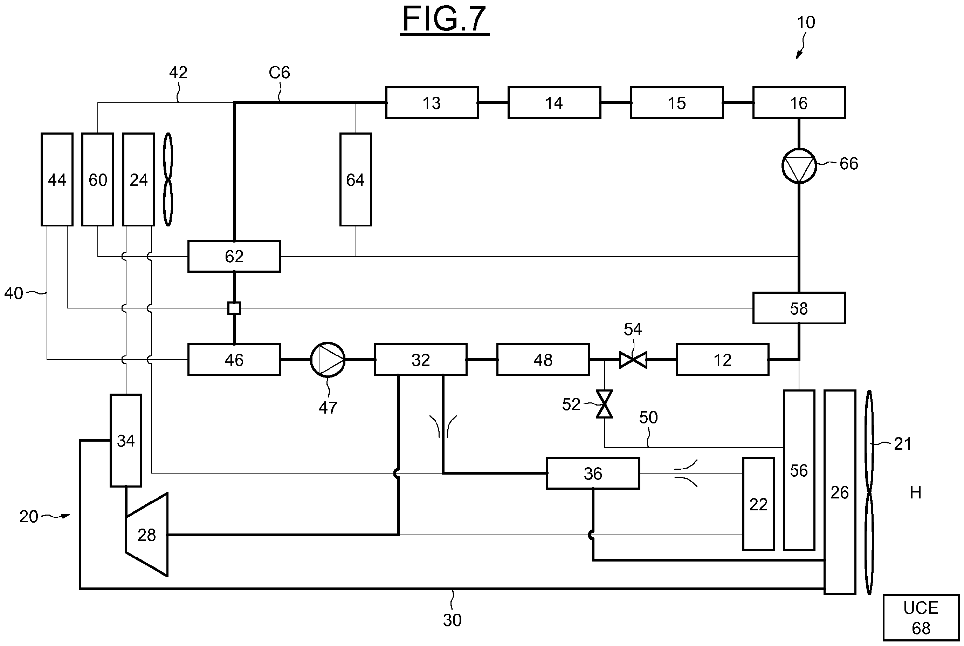

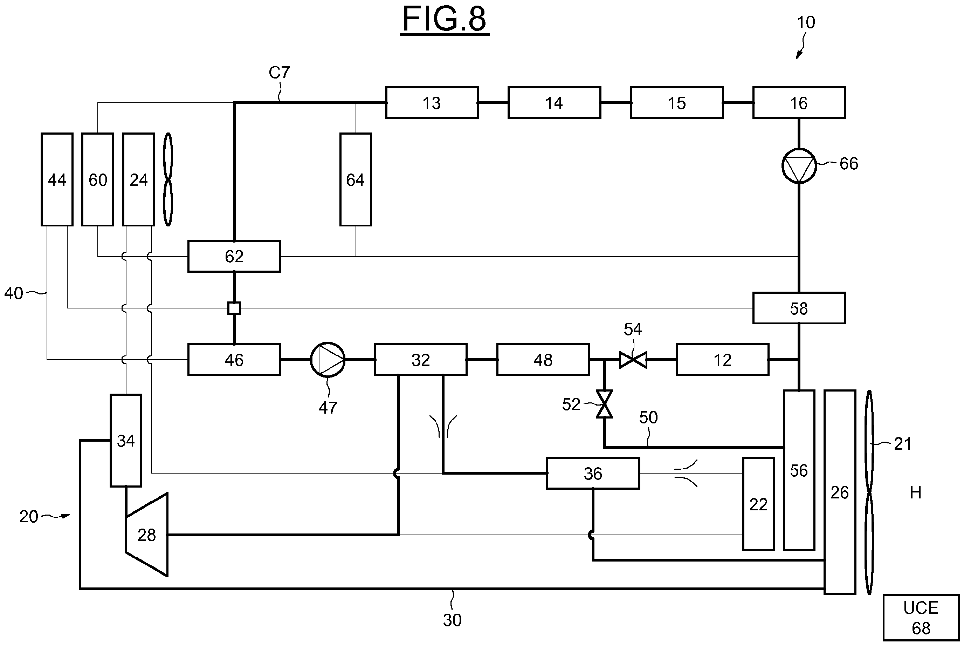

Les figures 7 et 8 illustrent deux modes de fonctionnement du système de régulation thermique 10 lorsque le véhicule roule et que la température extérieure Text est inférieure à la première valeur de seuil S1, et que la température de batterie est supérieure à une quatrième valeur de seuil. La quatrième valeur de seuil est, par exemple comprise entre 0°C et 10°C, par exemple égale à 5°C.

Dans la figure 7, l'eau circule notamment à travers la chaîne de traction regroupant la machine électrique 13, l'onduleur 15 et le convertisseur 16, la pompe 47 de la première boucle d'eau 40, la batterie 12 et la pompe 66 de la deuxième boucle d'eau 42. La pompe à chaleur 20 est actionnée pour que le fluide réfrigérant circule par l'échangeur 32, le compresseur 28 et le deuxième condenseur 26. Ainsi, lorsque le véhicule est en roulage, que la température extérieure est inférieure à la première valeur de seuil S1, que la température de la batterie 12 est supérieure à la quatrième valeur de seuil S4 et qu'il y a un besoin de chauffer l'habitacle du véhicule, l'habitacle est chauffé par la pompe à chaleur en utilisant la chaleur stockée dans la batterie 12 et dans la chaîne de traction.

Dans ce sixième mode M6 de régulation thermique, on actionne les pompes 47 et 66, l'échangeur 32, le compresseur 28 et le condenseur 26 et on ouvre les vannes 34, 46, 54, 58, 62 de manière à faire circuler l'eau et le fluide réfrigérant dans le circuit C6 représenté en gras sur la figure 7. Ce sixième mode M6 permet de fournir une puissance de chauffage importante.

La figure 8 diffère de la figure 7 uniquement par le fait que l'eau circule également par l'aérotherme 56. Ainsi, lorsque le véhicule est en roulage, que la température extérieure Text est inférieure à la première valeur de seuil S1, que la température TBat de la batterie 12 est supérieure à la quatrième valeur de seuil S4 et qu'il y a un besoin de chauffer l'habitacle du véhicule, l'habitacle est chauffé par la pompe à chaleur et l'aérotherme 56 en utilisant la chaleur stockée dans la batterie 12 et dans la chaîne de traction.

Dans ce septième mode M7 de régulation thermique, on actionne les pompes 47 et 66, l'échangeur 32, le compresseur 28, le condenseur 26 et l'aérotherme 56 et on ouvre les vannes 34, 46, 52, 54, 58, 62 de manière à faire circuler l'eau et le fluide réfrigérant dans le circuit C7 représenté en gras sur la figure 8.

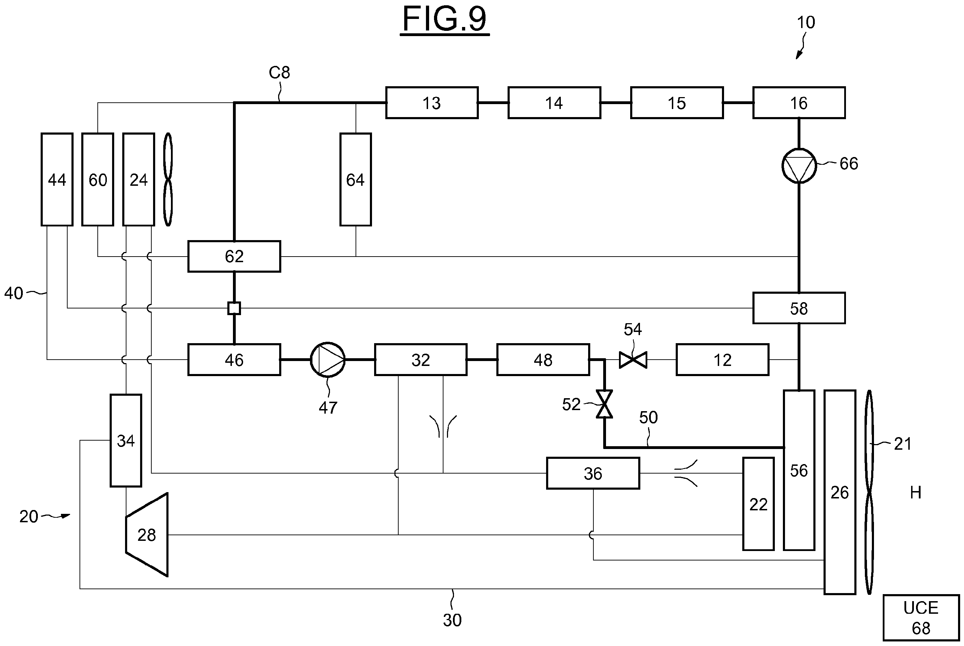

Dans la figure 9, l'eau circule notamment à travers la chaîne de traction regroupant la machine électrique 13, l'onduleur 15 et le convertisseur 16, la pompe 47 de la première boucle d'eau 40, l'aérotherme 56 et la pompe 66 de la deuxième boucle d'eau 42. La pompe à chaleur 20 n'est pas actionnée. Ainsi, lorsque le véhicule est en roulage, que la température extérieure est supérieure à une sixième valeur de seuil S6, par exemple comprise entre 0 et 20°C, que la température de la batterie 12 est inférieure à une quatrième valeur de seuil S4, par exemple comprise entre 0°C et 10°C, c'est-à-dire que la batterie n'a pas été préchauffée et qu'il y a un besoin de chauffer l'habitacle du véhicule, l'habitacle est chauffé par l'aérotherme en utilisant les calories de la chaîne de traction.

Dans ce huitième mode M8 de régulation thermique, on actionne les pompes 47 et 66, l'échangeur 32, le compresseur 28 et le condenseur 26 et on ouvre les vannes 46, 52, 58, 62 de manière à faire circuler l'eau et le fluide réfrigérant dans le circuit C8 représenté en gras sur la figure 9.

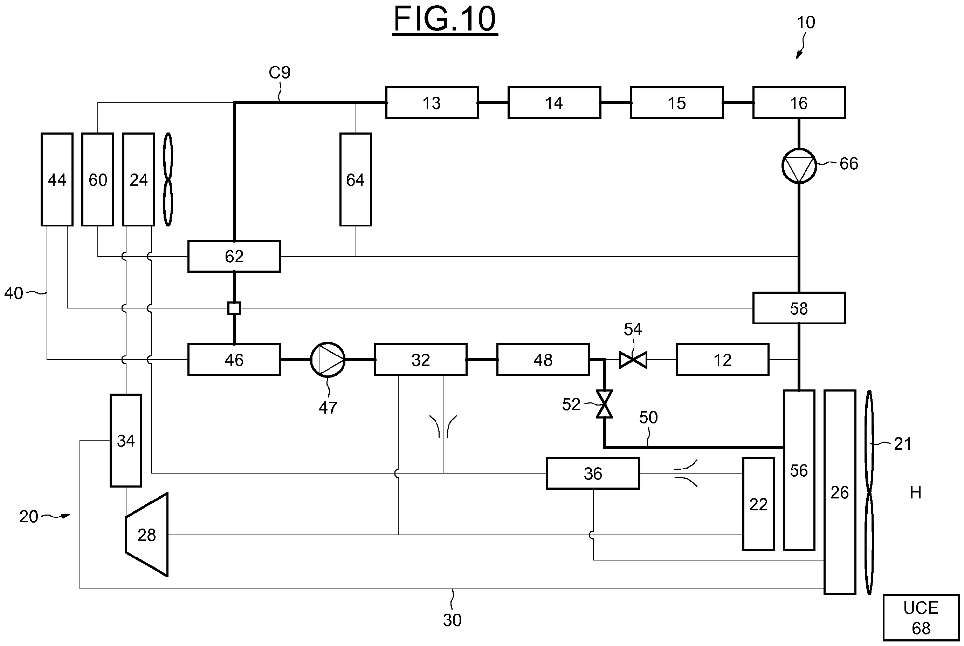

En variante, si la température extérieure est inférieure à la première valeur de seuil S1 et donc que la puissance de chauffage nécessaire est plus élevée, on peut actionner la résistance électrique 48, tel qu'illustré sur la figure 10 qui diffère uniquement de la figure 9 par le fait que la résistance électrique 48 est actionnée.

Dans ce neuvième mode M9 de régulation thermique, on actionne les pompes 47 et 66, l'échangeur 32, le compresseur 28 et le condenseur 26 et on ouvre les vannes 46, 52, 58, 62 de manière à faire circuler l'eau et le fluide réfrigérant dans le circuit C9 représenté en gras sur la figure 10.

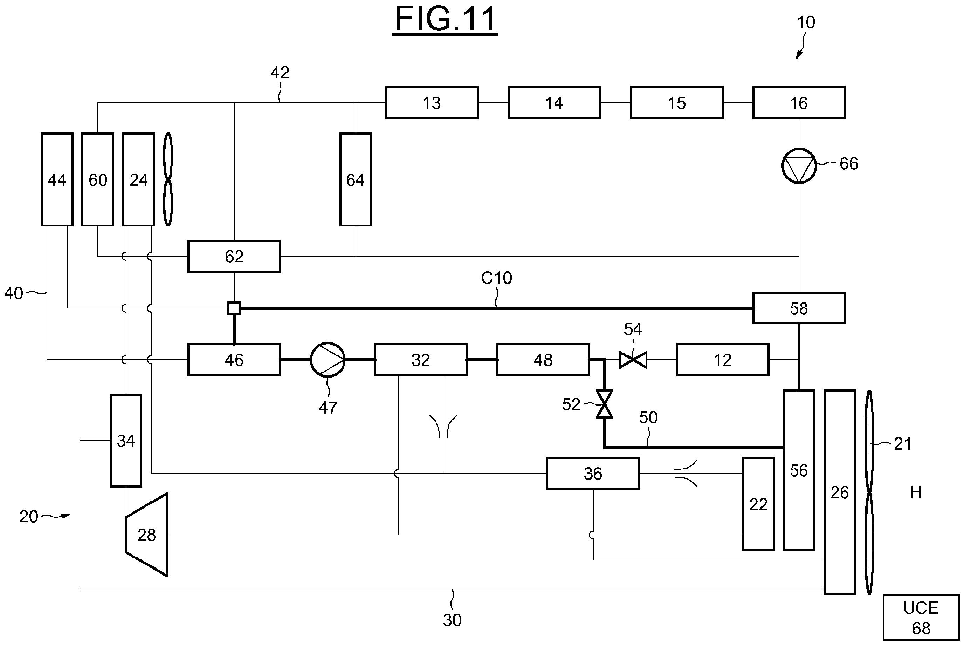

Dans la figure 11, on ferme la vanne 62 de manière à ce que l'eau ne circule plus à travers la chaîne de traction regroupant la machine électrique 13, l'onduleur 15 et le convertisseur 16 par rapport à la figure 10.

L'eau circule notamment à travers la pompe 47 de la première boucle d'eau 40, la résistance électrique 48 et l'aérotherme 56 pour former un chauffage rapide de l'habitacle en circuit court. Ainsi, lorsque le véhicule est en roulage, que la température extérieure est inférieure à la première valeur de seuil S1, que la température de la batterie 12 est supérieure à la quatrième valeur de seuil S4, qu'il y a un risque de givrage et qu'il y a un besoin de chauffer l'habitacle du véhicule, l'habitacle est chauffé par l'aérotherme 56 en utilisant seulement les calories de la résistance électrique CTP. L'inertie thermique de cette boucle l'eau C10 est bien plus faible que celle des circuits C8 et C9 des figures 9 et 10. Ceci trouve un avantage particulier lorsque la batterie n'est pas préchauffée, et que l'on veut avoir une sensation de chaleur dès le démarrage du véhicule.

Dans ce dixième mode M10 de régulation thermique, on actionne la pompe 47 de la première boucle d'eau 40 et la résistance électrique 48 et on pilote les vannes 46, 52 et 58 de manière à faire circuler l'eau dans le circuit C10 représenté en gras sur la figure 11.

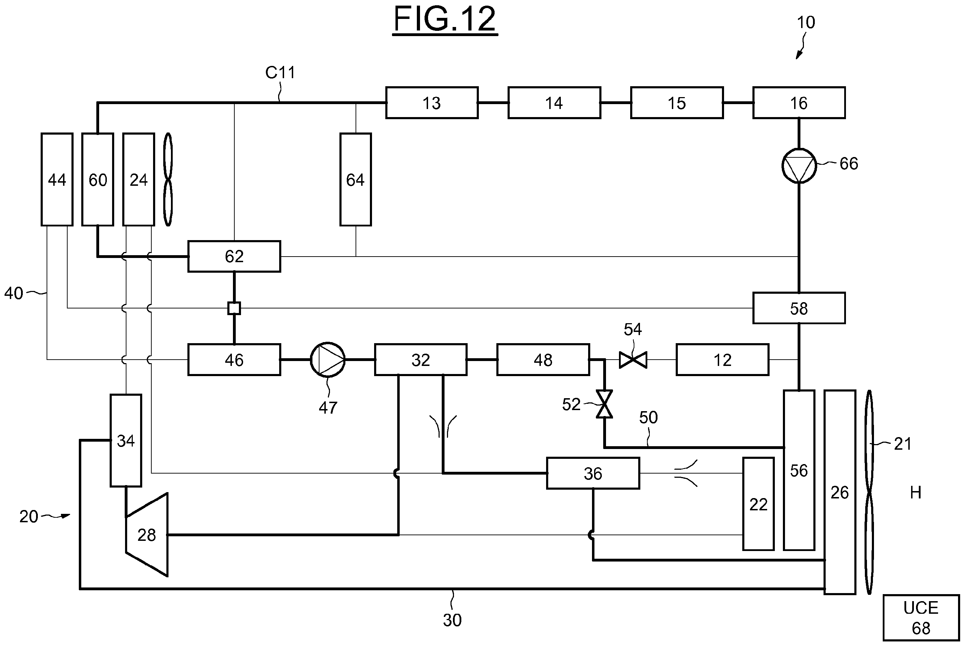

Dans les figures 12 à 14, le calculateur du véhicule vérifie si la batterie a une température inférieure à la quatrième valeur de seuil S4, par exemple soit la batterie n'a pas été préchauffée ou suite à un arrêt prolongé du véhicule, soit le roulage précédent a épuisé les calories stockées par le préchauffage et le type de roulage ne permet pas de générer assez de calories dans la chaîne de traction pour chauffer l'habitacle du véhicule, il est possible d'utiliser soit le premier radiateur 44 de la première boucle d'eau, soit le radiateur 60 de la deuxième boucle d'eau 42, soit les deux radiateurs 44, 60 pour récupérer les calories de l'air extérieur au véhicule.

Ainsi, sur la figure 12, l'utilisation des calories provenant de la chaîne de traction est couplée avec le radiateur d'eau 60 de la chaîne de traction pour récupérer les calories de l'air extérieur afin de chauffer l'habitacle du véhicule par la pompe à chaleur 20.

Dans ce onzième mode M11 de régulation thermique, on actionne les pompes 47 et 66, l'échangeur 32, le compresseur 28 et le condenseur 26 et on ouvre les vannes 34, 46, 52, 58, 62 de manière à faire circuler l'eau et le fluide réfrigérant dans le circuit C11 représenté en gras sur la figure 12.

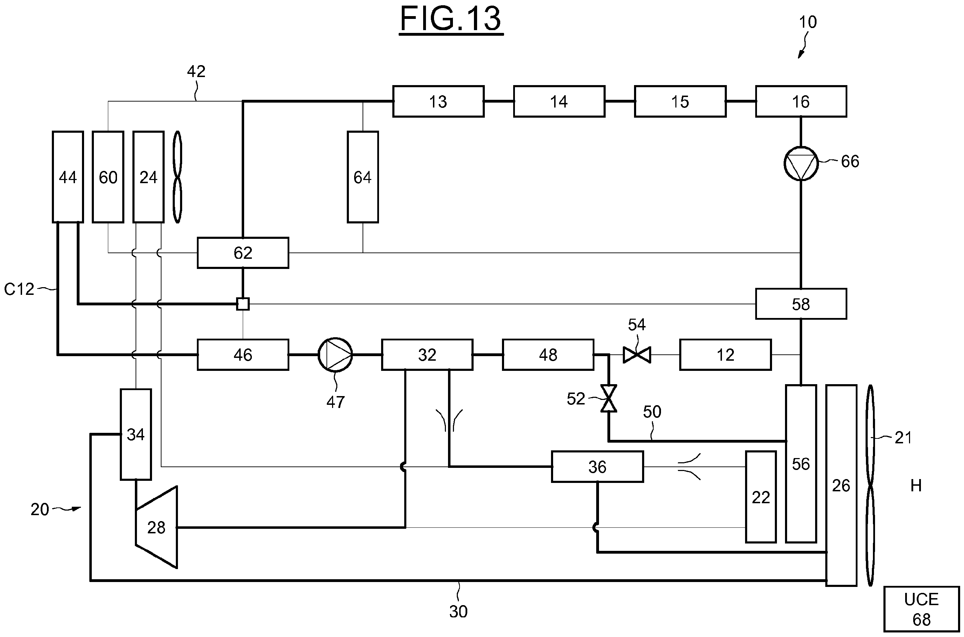

La figure 13 diffère de la figure 12 uniquement par le fait que l'on actionne le radiateur 44 d'eau de la batterie pour récupérer les calories de l'air extérieur pour le chauffage de l'habitacle par la pompe à chaleur 20.

Dans ce douzième mode M12 de régulation thermique, on actionne les pompes 47 et 66, l'échangeur 32, le compresseur 28 et le condenseur 26 et on pilote les vannes 34, 46, 52, 58, 62 de manière à faire circuler l'eau et le fluide réfrigérant dans le circuit C12 représenté en gras sur la figure 13. Ce mode est particulièrement avantageux en cas de givrage du radiateur d'eau 60 de la chaîne de traction.

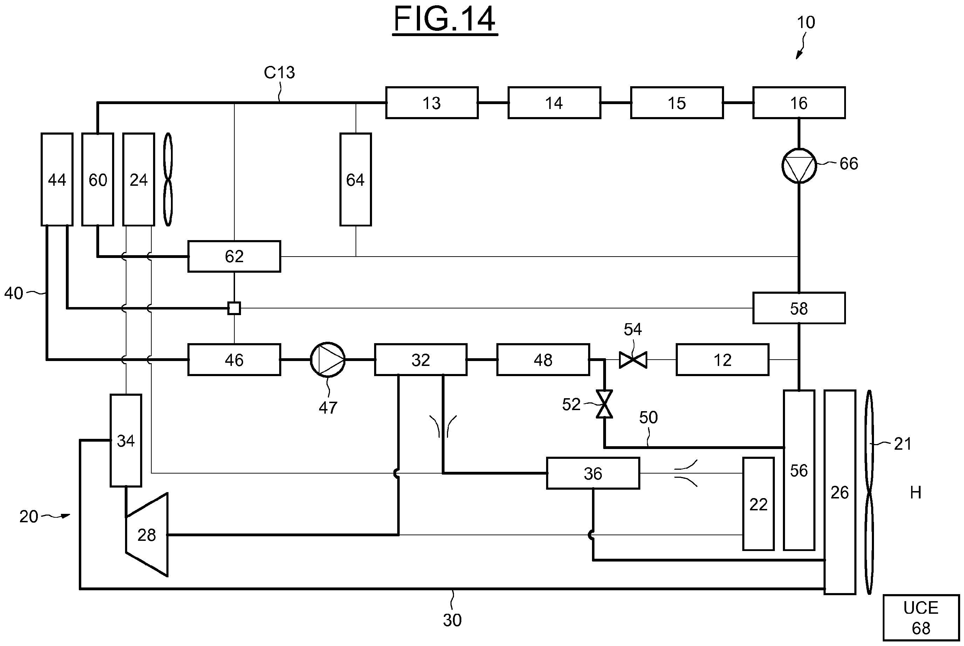

La figure 14 combine les figures 12 et 13 de manière à ce que l'on actionne à la fois le radiateur d'eau 60 de la chaîne de traction et le radiateur 44 d'eau de la batterie pour récupérer les calories de l'air extérieur pour le chauffage de l'habitacle par la pompe à chaleur 20.

Dans ce treizième mode M13 de régulation thermique, on actionne les pompes 47 et 66, l'échangeur 32, le compresseur 28 et le condenseur 26 et on pilote les vannes 34, 46, 52, 58, 62 de manière à faire circuler l'eau et le fluide réfrigérant dans le circuit C13 représenté en gras sur la figure 14. Ce mode permet de répondre à une demande de puissance de chauffage nécessaire plus élevée.

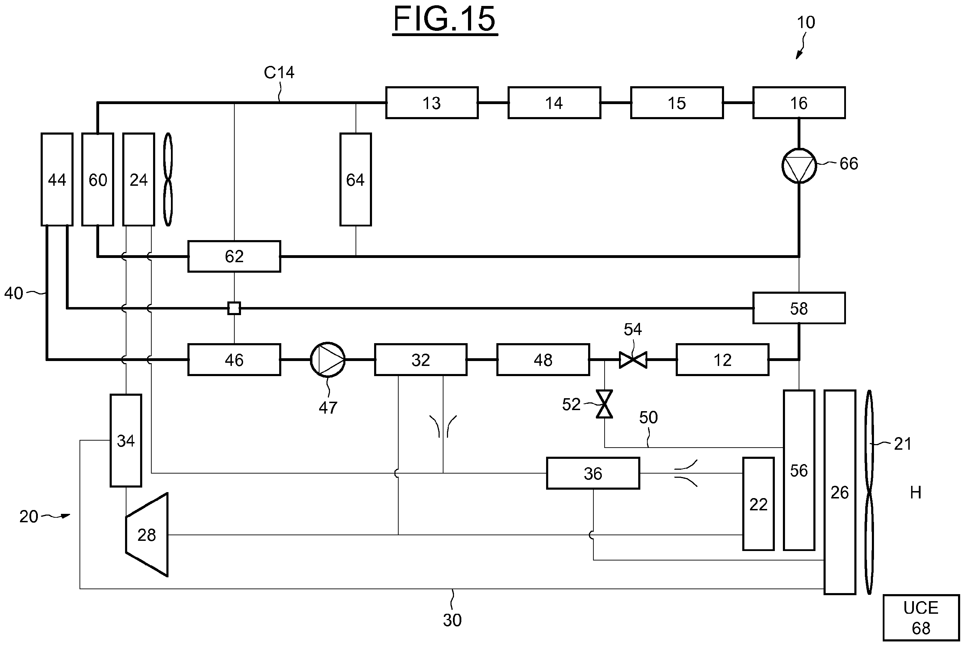

La figure 15 illustre un mode de fonctionnement du système de régulation thermique 10 lorsque le véhicule roule et que la température extérieure Text est inférieure ou égale à une troisième valeur de seuil S3, mais supérieure à la sixième valeur de seuil S6, proche de 20°C.

La troisième valeur de seuil est, par exemple comprise entre 20°C et 40°C, par exemple égale à 30°C.

Dans la figure 15, l'eau circule dans les deux boucles d'eau 40, 42. Ainsi, la batterie 12 et les composants de la chaîne de traction sont refroidis par deux circuits d'eau séparés avec leur propre radiateur. Il n'y a pas besoin, dans ce cas, d'actionner la pompe à chaleur 20, ce qui réduit considérablement la consommation électrique du système de régulation thermique.

Dans ce quatorzième mode M14 de régulation thermique, on actionne les pompes 47 et 66 et on pilote les vannes 48, 54, 58, 62 de manière à faire circuler l'eau dans le circuit C12 représenté en gras sur la figure 15.

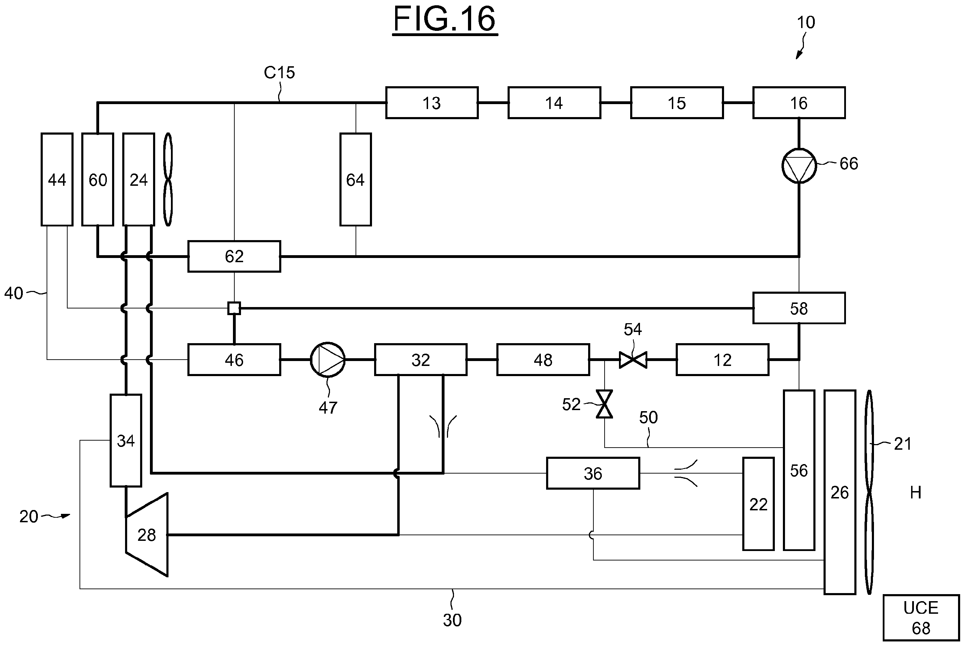

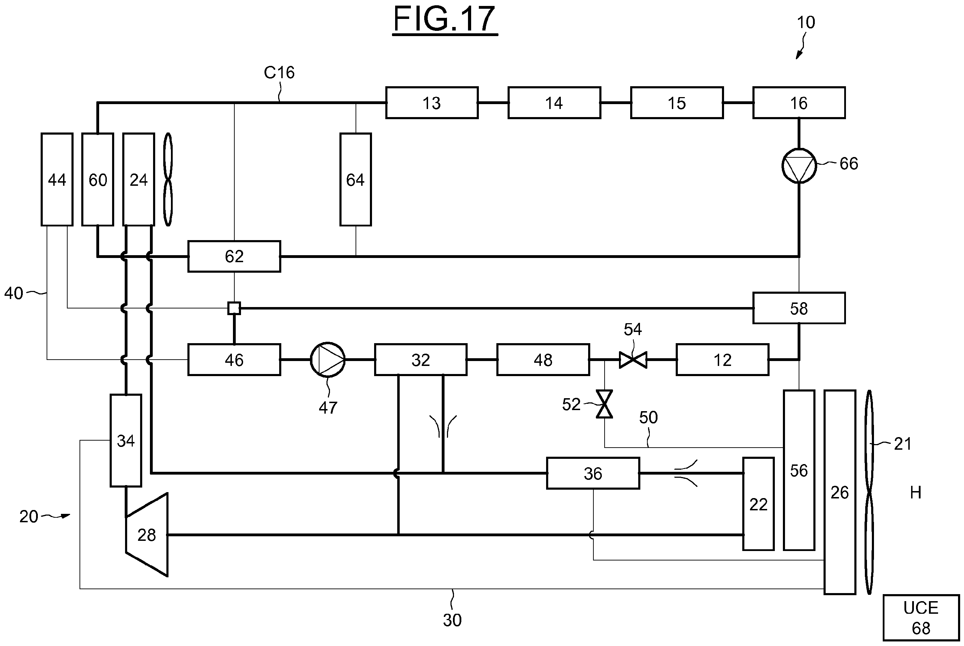

Les figures 16 et 17 illustrent deux modes de fonctionnement du système de régulation thermique 10 lorsque le véhicule est branché sur secteur et que la température extérieure Text est supérieure ou égale à une cinquième valeur de seuil S5, par exemple comprise entre 40°C et 50°C.

Dans la figure 16, l'eau circule notamment à travers le chargeur 14, le radiateur 60 de la chaîne de traction, la pompe 47 de la première boucle d'eau 40, l'échangeur 32, la batterie 12 et la pompe 66 de la deuxième boucle d'eau 42. La pompe à chaleur 20 est actionnée de manière à faire circuler le fluide réfrigérant à travers le premier condenseur, 24, le compresseur 28 et l'échangeur 32. Ainsi, lorsque le véhicule est branché sur secteur, que la température extérieure Text est supérieure à la cinquième valeur de seuil S5 et qu'il n'y a pas besoin de refroidir l'habitacle du véhicule, la batterie 12 est refroidie par l'échangeur 32 et le chargeur 14 est refroidi par le radiateur 60.

Dans ce quinzième mode M15 de régulation thermique, on actionne les pompes 47 et 66, l'échangeur 32, le compresseur 28 et le condenseur 24 et on ouvre les vannes 34, 46, 54, 58, 62 de manière à faire circuler l'eau et le fluide réfrigérant dans le circuit C15 représenté en gras sur la figure 16.

La figure 17 diffère de la figure 16 uniquement par le fait que le fluide réfrigérant circule dans l'évaporateur selon le circuit C16 représenté en gras sur la figure 17 afin de refroidir l'habitacle du véhicule par la pompe à chaleur 20.

Ce seizième mode M16 est également utilisé lorsque le véhicule est en roulage est que la température est supérieure à la cinquième valeur de seuil S5, par exemple égale à 45°C.

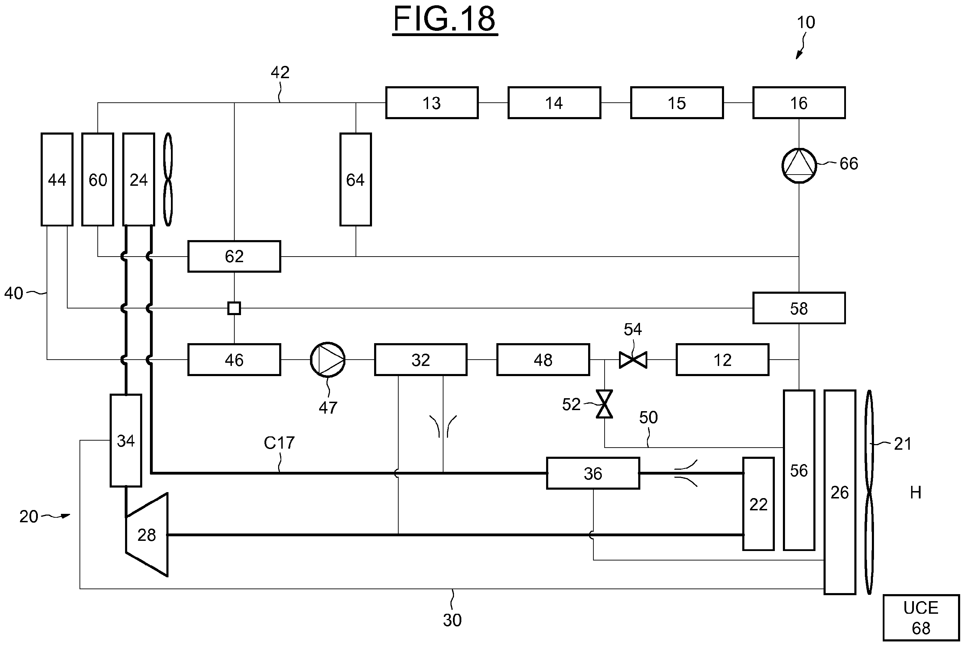

Dans la figure 18, la pompe à chaleur 20 est actionnée de manière à faire circuler le fluide réfrigérant à travers le premier condenseur 24 et le compresseur 28. Ainsi, lorsque le véhicule est en roulage, que la température extérieure Text est supérieure à la troisième valeur de seuil S3 et qu'il y a besoin de refroidir l'habitacle du véhicule mais pas la batterie, l'habitacle est refroidi sans refroidir la batterie.

Dans ce dix-septième mode M17 de régulation thermique, on ouvre les vannes 34 et 36 de manière à faire circuler le fluide réfrigérant dans le circuit C17 représenté en gras sur la figure 18.

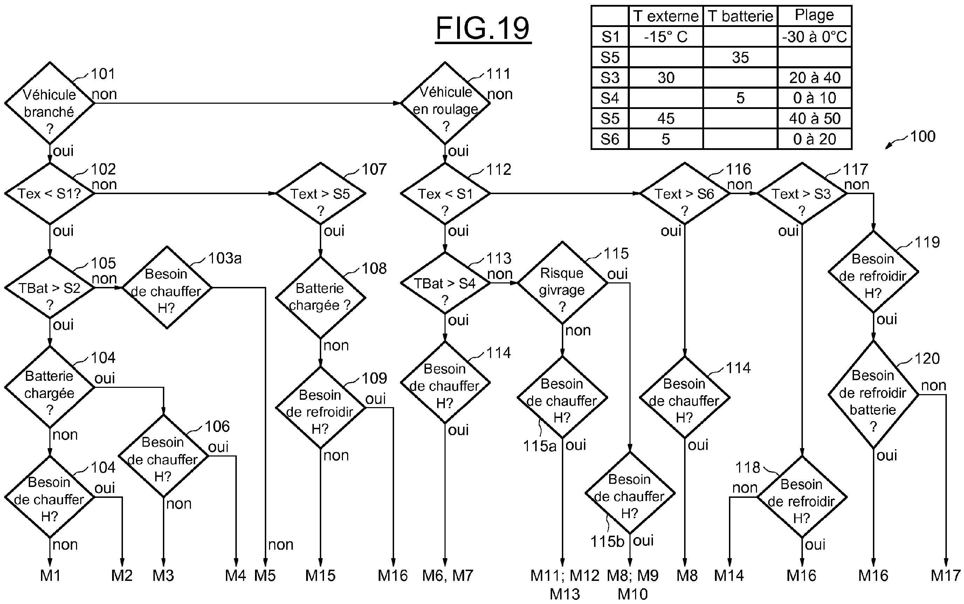

La figure 19 illustre les étapes du procédé 100 de fonctionnement du système de régulation thermique 10.

A l'étape 101, on vérifie si le véhicule est branché sur réseau. S'il est branché sur réseau, on vérifie à l'étape 102, que la température extérieure est inférieure à la première valeur de seuil S1, puis à l'étape 103 si la température de batterie est inférieure à la température maximale de préchauffage S2, puis à l'étape 104 si la batterie est chargée, et enfin à l'étape 105 s'il y a un besoin de chauffer l'habitacle du véhicule.

Ainsi, lorsque le véhicule est branché sur réseau, que la température extérieure est inférieure à la première valeur de seuil S1, que la température de batterie est toujours au-dessous de la température maximale de préchauffage, et que la batterie 12 est en charge et qu'il n'y a pas besoin de chauffer l'habitacle, le mode de fonctionnement M1 est activé et la batterie 12 est préchauffée par la résistance électrique 48, la perte générée par la batterie elle-même et les calories du chargeur 14.

S'il y a besoin de chauffer l'habitacle, le mode de fonctionnement M2 est activé et la batterie 12 et l'habitacle sont préchauffés par la résistance électrique 48, les calories du chargeur 14 et les pertes générées par la batterie elle-même.

Après l'étape 104 on a vérifié que la batterie 12 est chargée, on vérifie, à l'étape 106 s'il y a besoin de chauffer l'habitacle.

Ainsi, lorsque le véhicule est branché sur réseau, que la température extérieure est inférieure à la première valeur de seuil S1, que la batterie 12 est chargée et qu'il n'y a pas besoin de chauffer l'habitacle, le mode de fonctionnement M3 est activé et la batterie 12 est chauffée uniquement par la résistance électrique 48.

S'il y a besoin de chauffer l'habitacle, le mode de fonctionnement M4 est activé et la batterie 12 est chauffée uniquement par la résistance électrique 48 et l'habitacle H est chauffé par l'aérotherme utilisant les calories de la résistance électrique.

Si la température Tbat de la batterie 12 est supérieure à la deuxième valeur de seuil S2, c'est-à-dire qu'elle a été suffisamment préchauffée, et qu'on a vérifié à l'étape 103a qu'il y a besoin de chauffer l'habitacle, le mode de fonctionnement M5 est activé et l'habitacle H du véhicule est chauffé par l'aérotherme et la résistance 48, la batterie 12 n'étant alors plus chauffée.

Si la température extérieure Text est supérieure à la première valeur de seuil S1, on vérifie, à l'étape 107, si elle est supérieure à la cinquième valeur de seuil S5, puis à l'étape 108 si la batterie est chargée, et enfin à l'étape 109 s'il y a un besoin de refroidir l'habitacle H.

Ainsi, lorsque le véhicule est branché sur secteur, que la température extérieure Text est supérieure à la cinquième valeur de seuil S5, que la batterie est en charge et qu'il n'y a pas besoin de refroidir l'habitacle du véhicule, le mode de fonctionnement M15 est activé et la batterie 12 est refroidie par l'échangeur 32 et le chargeur 14 est refroidi par le radiateur 60 de la chaîne de traction.

S'il y a besoin de chauffer l'habitacle, le mode de fonctionnement M16 est activé, la batterie 12 est refroidie par l'échangeur 32, le chargeur 14 est refroidi par le radiateur 60 de la chaîne de traction et l'habitacle du véhicule par la pompe à chaleur 20.

A l'étape 111, on vérifie si le véhicule est en roulage.

S'il est en roulage, on vérifie à l'étape 112, que la température extérieure est inférieure à la première valeur de seuil S1, puis à l'étape 113 si la température TBat de la batterie est supérieure à la quatrième valeur de seuil S4, et enfin à l'étape 114 s'il y a un besoin de chauffer l'habitacle du véhicule.

Ainsi, lorsque le véhicule est en roulage, que la température extérieure est inférieure à la première valeur de seuil S1, que la température de la batterie 12 est supérieure à la quatrième valeur de seuil S4 et qu'il y a un besoin de chauffer l'habitacle du véhicule, on actionne le mode M6 dans lequel l'habitacle est chauffé par la pompe à chaleur en utilisant la chaleur stockée dans la batterie 12 et dans la chaîne de traction, ou le mode M7 dans lequel l'habitacle est chauffé par la pompe à chaleur et l'aérotherme 56 en utilisant la chaleur stockée dans la batterie 12 et dans la chaîne de traction.

Si la température de batterie est inférieure à la température minimale de batterie S4, on interdit de continuer à utiliser les calories de batterie, et on vérifie, à l'étape 115 s'il y a un risque de givrage du radiateur d'eau et aux étapes 115a et 115b s'il y a besoin de chauffer l'habitacle. S'il n'y a pas de risque de givrage, on actionne les modes M11, M12 ou M13 dans lesquels pour chauffer l'habitacle on utilise soit le premier radiateur 44 de la première boucle d'eau, soit le radiateur 60 de la deuxième boucle d'eau 42, soit les deux radiateurs 44, 60 pour récupérer les calories de l'air extérieur au véhicule.

Ainsi, selon le mode M11, l'utilisation des calories provenant de la chaîne de traction est couplée avec le radiateur d'eau 60 de la chaîne de traction pour récupérer les calories de l'air extérieur afin de chauffer l'habitacle du véhicule par la pompe à chaleur 20.

Selon le mode M12, l'utilisation des calories provenant de la chaîne de traction est couplée avec le radiateur d'eau 44 de la batterie pour récupérer les calories de l'air extérieur afin de chauffer l'habitacle du véhicule par la pompe à chaleur 20. Ce mode est particulièrement avantageux en cas de givrage du radiateur d'eau 60 de la chaîne de traction.

Selon le mode M13, l'utilisation des calories provenant de la chaîne de traction est couplée avec le radiateur d'eau 44 de la batterie et le radiateur d'eau 60 de la chaîne de traction pour récupérer les calories de l'air extérieur afin de chauffer l'habitacle du véhicule par la pompe à chaleur 20. Ce mode permet de répondre à une demande de puissance de chauffage nécessaire plus élevée.

Si la température de batterie est inférieure à la température minimale de batterie S4, on interdit de continuer à utiliser les calories de batterie, et on vérifie, à l'étape 115 s'il y a de risque de givrage du radiateur d'eau, on actionne le mode M8 dans lequel l'habitacle est chauffé par l'aérotherme en utilisant les calories de la chaîne de traction. En variante, si la température extérieure est inférieure à la première valeur de seuil S1 et donc que la puissance de chauffage nécessaire est plus élevée, on peut actionner la résistance électrique 48. On peut aussi actionner les modes M9 ou M10 ou l'eau ne circule que dans la résistance électrique 48 et l'aérotherme pour un chauffage rapide de l'habitacle.

Si la température extérieure est supérieure à la première valeur de seuil S1, on vérifie, à l'étape 116 si la température extérieure est inférieure à la sixième valeur de seuil S6, puis à l'étape 114 s'il y a besoin de chauffer l'habitacle.

Ainsi, lorsque le véhicule est en roulage, que la température extérieure est supérieure à la première valeur de seuil S1, mais inférieure à la sixième valeur de seuil S6, et qu'il y a un besoin de chauffer l'habitacle du véhicule, on actionne le mode M8 dans lequel l'habitacle est chauffé par l'aérotherme en utilisant les calories de la chaîne de traction.

En variante, si la température extérieure est inférieure à la première valeur de seuil S1 et donc que la puissance de chauffage nécessaire est plus élevée, on peut actionner la résistance électrique 48.

Si la température extérieure est supérieure à la sixième valeur de seuil S6, on vérifie, à l'étape suivante 117, si la température Text est inférieure à la troisième valeur de seuil S3 et à l'étape 118 s'il y a besoin de refroidir l'habitacle du véhicule. Si la température Text est inférieure à la troisième valeur de seuil S3 et qu'il n'y a pas besoin de refroidir l'habitacle, on actionne le mode M14, dans lequel la batterie 12 et les composants de la chaîne de traction sont refroidis par deux circuits d'eau séparés avec leur propre radiateur. Il n'y a pas besoin, dans ce cas, d'actionner la pompe à chaleur 20, ce qui réduit considérablement la consommation électrique du système de régulation thermique.

Si la température Text est inférieure à la troisième valeur de seuil S3 et qu'il y a besoin de refroidir l'habitacle, on actionne le mode M16, dans lequel la batterie 12 est refroidie par l'échangeur 32 et le chargeur 14 est refroidi par le radiateur 60 de la chaîne de traction et l'habitacle du véhicule est refroidi par la pompe à chaleur 20.

A l'étape 111, on vérifie si le véhicule est en roulage.

Si au contraire la température Text est supérieure à la troisième valeur de seuil S3, on vérifie à l'étape 119 qu'il y a besoin de refroidir l'habitacle H, et à l'étape 120 qu'il n'y a pas besoin de refroidir la batterie, alors on actionne le mode M17 dans lequel le fluide réfrigérant circule à travers le premier condenseur 24 et le compresseur 28. Ainsi, lorsque le véhicule est en roulage, que la température extérieure Text est supérieure à la troisième valeur de seuil S3 et qu'il y a besoin de refroidir l'habitacle du véhicule mais pas la batterie, l'habitacle est refroidi sans refroidir la batterie.

Lorsque le véhicule est en roulage, que la température extérieure Text est supérieure à la troisième valeur de seuil S3 et qu'il y a besoin de refroidir l'habitacle du véhicule et la batterie, on actionne le mode M16.

Grâce au système et au procédé selon l'invention, il est possible d'assurer le confort thermique de l'habitacle tout en minimisant la consommation électrique du système de régulation thermique.

De plus, grâce au fait que le circuit de réfrigérant de la pompe à chaleur comprenant deux condenseurs et un évaporateur distincts est plus simple que les circuits de pompe à chaleur conventionnels basés uniquement sur un condenseur en face avant du véhicule, il est possible d'éviter le risque de givrage du condenseur. En effet, grâce à l'invention, on utilise principalement les calories générées par la chaîne de traction électrique et aussi la chaleur stockée dans la batterie. Grace à sa forte inertie thermique, on peut ainsi assurer une durée de chauffage de l'habitacle importante.

De plus, dans le cas où le véhicule roule et ne peut pas être branché sur secteur juste avant roulage afin de préchauffer la batterie, le système et le procédé selon l'invention permet d'utiliser les calories de la chaîne de traction, ainsi que d'utiliser les calories contenues dans l'air par l'intermédiaire d'un ou deux radiateurs à eau situés en face avant du véhicule.

## Revendications

1. Procédé de fonctionnement d'un système de régulation thermique (10) d'un véhicule automobile à propulsion électrique ou hybride comprenant au moins une batterie électrique (12) d'entraînement d'une machine électrique (13), le système de régulation thermique (10) comprenant un système de pompe à chaleur (20) comportant un évaporateur (22), un premier condenseur (24) situé en face avant du véhicule, un deuxième condenseur (26) destiné à chauffer l'habitacle (H) du véhicule, un compresseur (28), un échangeur eau/réfrigérant (32) et un fluide frigorigène ou réfrigérant traversant ces composants circulant dans une boucle de réfrigérant reliant l'évaporateur (22), les condenseurs (24, 26), le compresseur (28) et l'échangeur eau/réfrigérant (32), le système de régulation thermique (10) comprenant en outre deux boucles d'eau distinctes (40, 42), à savoir une première boucle d'eau (40) fonctionnant à une première température destinée à refroidir la batterie électrique (12) et une deuxième boucle d'eau (42) fonctionnant à une deuxième température destinée à refroidir la machine électrique (13), la première boucle d'eau (40) comprenant un premier radiateur à eau (44), l'échangeur eau/réfrigérant (32), une résistance électrique (48), la batterie électrique (12) et un aérotherme (56) disposé entre l'évaporateur (22) et le deuxième condenseur (26) de la pompe à chaleur (20) et la deuxième boucle d'eau (42) comprenant un radiateur à eau (60) de la chaîne de traction, la machine électrique (13) et le chargeur (14), le radiateur (60) étant disposé en parallèle du premier condenseur (24) et du premier radiateur à eau (44), **caractérisé en ce que** lorsque le véhicule roule sans avoir été préalablement branché à une source d'énergie électrique externe pour recharger la batterie (12), que la température extérieure est inférieure à une première valeur de seuil (S1), que la batterie (12) a une température inférieure à une quatrième valeur de seuil (S4) et qu'il n'y a pas de risque de givrage du radiateur à eau (40,60) , on utilise les calories provenant de la chaîne de traction couplée avec au moins un des radiateurs à eau (44,60) pour récupérer les calories de l'air extérieur afin de chauffer l'habitacle du véhicule par la pompe à chaleur (20).

2. Procédé selon la revendication 1, dans lequel lorsque le véhicule est raccordé à une source d'énergie électrique externe pour recharger la batterie (12), que la température extérieure est inférieure à la première valeur de seuil (S1) et que la batterie (12) est en charge, la batterie (12) est préchauffée par la résistance électrique (48) et les calories du chargeur (14).

3. Procédé selon la revendication 2, dans lequel lorsqu'il y a un besoin de chauffer l'habitacle, la batterie (12) est préchauffée par la résistance électrique (48) et les calories du chargeur (14) et l'habitacle est chauffé par l'aérotherme grâce aux calories du chargeur et de la résistance électrique.

4. Procédé selon la revendication 1, dans lequel lorsque le véhicule est raccordé à une source d'énergie électrique externe pour recharger la batterie (12), que la température extérieure est inférieure à la première valeur de seuil (S1) et que la batterie (12) est chargée la batterie (12) est chauffée uniquement par la résistance électrique (48).

5. Procédé selon la revendication 4, dans lequel lorsqu'il y a besoin de chauffer l'habitacle, la batterie (12) est chauffée uniquement par la résistance électrique (48) et l'habitacle (H) est chauffé par l'aérotherme (56) utilisant les calories de la résistance électrique.

6. Procédé selon la revendication 4 ou 5, lorsque la température de la batterie est supérieure à une deuxième valeur de seuil (S2), l'habitacle (H) du véhicule est chauffé par l'aérotherme (56) et la résistance (48), la batterie n'étant alors plus chauffée.

7. Procédé selon la revendication 1, dans lequel lorsque le véhicule est en roulage, que la température extérieure est inférieure à la première valeur de seuil (S1) , que la température de la batterie (12) est supérieure à une quatrième valeur de seuil (S4) et qu'il y a un besoin de chauffer l'habitacle du véhicule, l'habitacle est chauffé par la pompe à chaleur en utilisant la chaleur stockée dans la batterie (12) et dans la chaîne de traction.

8. Procédé selon la revendication 7, dans lequel l'habitacle est chauffé par la pompe à chaleur (20) et l'aérotherme (56) en utilisant la chaleur stockée dans la batterie (12) et dans la chaîne de traction.

9. Procédé selon la revendication 1, dans lequel lorsque le véhicule est en roulage, que la température extérieure est supérieure à une sixième valeur de seuil (S6), que la température de la batterie (12) est inférieure à la quatrième valeur de seuil (S4) et qu'il y a un besoin de chauffer l'habitacle du véhicule, l'habitacle est chauffé par l'aérotherme (56) en utilisant les calories de la chaîne de traction.

10. Procédé selon la revendication 9, dans lequel lorsque la température extérieure (Text) est inférieure à une troisième valeur de seuil (S3) et qu'il n'y pas besoin de refroidir l'habitacle du véhicule, la batterie (12) et les composants de la chaîne de traction sont refroidis par les deux boucles d'eau séparées (40, 42) avec leur propre radiateur à eau (44, 60).

11. Procédé selon la revendication 1, dans lequel lorsque le véhicule est raccordé à une source d'énergie électrique externe pour recharger la batterie (12), que la température extérieure est supérieure à une cinquième valeur de seuil (S5) et que la batterie est chargée, la batterie (12) est refroidie par l'échangeur (32) et le chargeur (14) est refroidi par le radiateur 60 de la chaîne de traction.

12. Procédé selon la revendication 11, dans lequel lorsqu'il y a un besoin de refroidir l'habitacle, la batterie (12) est refroidie par l'échangeur (32) et le chargeur (14) est refroidi par le radiateur (60) de la chaîne de traction et l'habitacle du véhicule est refroidi par la pompe à chaleur (20).

13. Procédé selon la revendication 1, dans lequel lorsque le véhicule est en roulage, que la température extérieure est supérieure à une cinquième valeur de seuil (S5), la batterie (12) est refroidie par l'échangeur (32), le chargeur (14) est refroidi par le radiateur (60) de la chaîne de traction et l'habitacle du véhicule par la pompe à chaleur (20).

14. Système de régulation thermique (10) d'un véhicule automobile à propulsion électrique ou hybride comprenant au moins une batterie électrique (12) d'entraînement d'une machine électrique (13), **caractérisé en ce qu'**il comprend un système de pompe à chaleur (20) comportant un évaporateur (22), un premier condenseur (24) situé en face avant du véhicule, un deuxième condenseur (26) destiné à chauffer l'habitacle (H) du véhicule, un compresseur (28), un échangeur eau/réfrigérant (32) et un fluide frigorigène ou réfrigérant traversant ces composants circulant dans une boucle de réfrigérant reliant l'évaporateur (22), les condenseurs (24, 26), le compresseur (28) et l'échangeur eau/réfrigérant (32), et **en ce qu'**il comprend deux boucles d'eau distinctes (40, 42), à savoir une première boucle d'eau (40) fonctionnant à une première température destinée à refroidir la batterie électrique (12) et une deuxième boucle d'eau (42) fonctionnant à une deuxième température destinée à refroidir la machine électrique (13), la première boucle d'eau (40) comprenant un premier radiateur à eau (44), l'échangeur eau/réfrigérant (32), une résistance électrique (48), la batterie électrique (12) et un aérotherme (56) disposé entre l'évaporateur (22) et le deuxième condenseur (26) de la pompe à chaleur (20) et la deuxième boucle d'eau (42) comprenant un radiateur à eau (60) de la chaîne de traction, la machine électrique (13) et le chargeur (14), le radiateur (60) étant disposé en parallèle du premier condenseur (24) et du premier radiateur à eau (44).

## Patentansprüche

1. Betriebsverfahren eines Wärmeregulierungssystems (10) eines Kraftfahrzeugs mit Elektro- oder Hybridantrieb, das mindestens eine elektrische Batterie (12) zum Antrieb einer elektrischen Maschine (13) umfasst, wobei das Wärmeregulierungssystem (10) ein Wärmepumpensystem (20) umfasst, das einen Verdampfer (22), einen ersten Kondensator (24), der sich an der Vorderseite des Fahrzeugs befindet, einen zweiten Kondensator (26) zum Beheizen des Innenraums (H) des Fahrzeugs, einen Verdichter (28), einen Wasser/Kühlmittel-Tauscher (32) und ein Kälte- oder Kühlfluid, das diese Komponenten durchläuft, das in einer Kühlmittelschleife strömt, die den Verdampfer (22), die Kondensatoren (24, 26), den Verdichter (28) und den Wasser/Kühlmittel-Tauscher (32) verbindet, aufweist, wobei das Wärmeregulierungssystem (10) ferner zwei gesonderte Wasserschleifen (40, 42) umfasst, und zwar eine erste Wasserschleife (40), die bei einer ersten Temperatur arbeitet, die dazu bestimmt ist, die elektrische Batterie (12) zu kühlen, und eine zweite Wasserschleife (42), die bei einer zweiten Temperatur arbeitet, die dazu bestimmt ist, die elektrische Maschine (13) zu kühlen, wobei die erste Wasserschleife (40) einen ersten Wasserkühler (44), den Wasser/Kühlmittel-Tauscher (32), einen elektrischen Widerstand (48), die elektrische Batterie (12) und einen Lufterwärmer (56), der zwischen dem Verdampfer (22) und dem zweiten Kondensator (26) der Wärmepumpe (20) angeordnet ist, umfasst, und die zweite Wasserschleife (42) einen Wasserkühler (60) des Antriebsstrangs, die elektrische Maschine (13) und die Ladeeinrichtung (14) umfasst, wobei der Kühler (60) parallel zum ersten Kondensator (24) und zum ersten Wasserkühler (44) angeordnet ist,
**dadurch gekennzeichnet, dass**, wenn das Fahrzeug fährt, ohne zuvor an eine externe Quelle elektrischer Energie angeschlossen worden zu sein, um die Batterie (12) wieder aufzuladen, wenn die Außentemperatur unter einem ersten Schwellenwert (S1) liegt, wenn die Batterie (12) eine Temperatur unter einem vierten Schwellenwert (S4) aufweist, und keine Gefahr einer Vereisung des Wasserkühlers (40, 60) gegeben ist, die Kalorien aus dem Antriebsstrang genutzt werden, der mit mindestens einem der Wasserkühler (44, 60) gekoppelt ist, um die Kalorien aus der Außenluft zurückzugewinnen, um den Innenraum des Fahrzeugs durch die Wärmepumpe (20) zu beheizen.

2. Verfahren nach Anspruch 1, wobei, wenn das Fahrzeug an eine externe Quelle elektrischer Energie angeschlossen ist, um die Batterie (12) wieder aufzuladen, wenn die Außentemperatur unter dem ersten Schwellenwert (S1) liegt und die Batterie (12) geladen wird, die Batterie (12) vom elektrischen Widerstand (48) und den Kalorien der Ladeeinrichtung (14) vorgeheizt wird.

3. Verfahren nach Anspruch 2, wobei, wenn ein Bedarf vorliegt, den Innenraum zu beheizen, die Batterie (12) vom elektrischen Widerstand (48) und den Kalorien der Ladeeinrichtung (14) vorgeheizt wird und der Innenraum vom Lufterwärmer mithilfe der Kalorien der Ladeeinrichtung und des elektrischen Widerstands beheizt wird.

4. Verfahren nach Anspruch 1, wobei, wenn das Fahrzeug an eine externe Quelle elektrischer Energie angeschlossen ist, um die Batterie (12) wieder aufzuladen, wenn die Außentemperatur unter dem ersten Schwellenwert (S1) liegt und die Batterie (12) geladen wird, die Batterie (12) nur vom elektrischen Widerstand (48) beheizt wird.

5. Verfahren nach Anspruch 4, wobei, wenn ein Bedarf vorliegt, den Innenraum zu beheizen, die Batterie (12) nur vom elektrischen Widerstand (48) und der Innenraum (H) vom Lufterwärmer (56) unter Nutzung der Kalorien des elektrischen Widerstands beheizt wird.

6. Verfahren nach Anspruch 4 oder 5, wenn die Temperatur der Batterie über einem zweiten Schwellenwert (S2) liegt, der Innenraum (H) des Fahrzeugs vom Lufterwärmer (56) und vom Widerstand (48) beheizt wird, wobei die Batterie dann nicht mehr beheizt wird.

7. Verfahren nach Anspruch 1, wobei, wenn das Fahrzeug fährt, wenn die Außentemperatur unter dem ersten Schwellenwert (S1) liegt, wenn die Temperatur der Batterie (12) über dem vierten Schwellenwert (S4) liegt und ein Bedarf vorliegt, den Innenraum des Fahrzeugs zu beheizen, der Innenraum von der Wärmepumpe unter Nutzung der Wärme, die in der Batterie (12) und im Antriebsstrang gespeichert ist, beheizt wird.

8. Verfahren nach Anspruch 7, wobei der Innenraum von der Wärmepumpe (20) und dem Lufterwärmer (56) unter Nutzung der Wärme, die in der Batterie (12) und im Antriebsstrang gespeichert ist, beheizt wird.

9. Verfahren nach Anspruch 1, wobei, wenn das Fahrzeug fährt, wenn die Außentemperatur über einem sechsten Schwellenwert (S6) liegt, wenn die Temperatur der Batterie (12) unter dem vierten Schwellenwert (S4) liegt und ein Bedarf vorliegt, den Innenraum des Fahrzeugs zu beheizen, der Innenraum vom Lufterwärmer (56) unter Nutzung der Kalorien des Antriebsstrangs beheizt wird.

10. Verfahren nach Anspruch 9, wobei, wenn die Außentemperatur (Text) unter einem dritten Schwellenwert (S3) liegt und kein Bedarf vorliegt, den Innenraum des Fahrzeugs zu kühlen, die Batterie (12) und die Bestandteile des Antriebsstrangs von den zwei getrennten Wasserschleifen (40, 42) mit deren eigenem Wasserkühler (44, 60) gekühlt werden.

11. Verfahren nach Anspruch 1, wobei, wenn das Fahrzeug an eine externe Quelle elektrischer Energie angeschlossen ist, um die Batterie (12) wieder aufzuladen, wenn die Außentemperatur über einem fünften Schwellenwert (S5) liegt und die Batterie geladen wird, die Batterie (12) vom Tauscher (32) gekühlt wird und die Ladeeinrichtung (14) vom Kühler 60 des Antriebsstrangs gekühlt wird.

12. Verfahren nach Anspruch 11, wobei, wenn ein Bedarf vorliegt, den Innenraum zu kühlen, die Batterie (12) vom Tauscher (32) gekühlt wird und die Ladeeinrichtung (14) vom Kühler (60) des Antriebsstrangs gekühlt wird und der Innenraum des Fahrzeugs von der Wärmepumpe (20) gekühlt wird.

13. Verfahren nach Anspruch 1, wobei, wenn das Fahrzeug fährt, wenn die Außentemperatur über einem fünften Schwellenwert (S5) liegt, die Batterie (12) vom Tauscher (32) gekühlt wird, die Ladeeinrichtung (14) vom Kühler (60) des Antriebsstrangs und der Innenraum des Fahrzeugs von der Wärmepumpe (20) gekühlt wird.

14. Wärmeregulierungssystem (10) eines Kraftfahrzeugs mit Elektro- oder Hybridantrieb, das mindestens eine elektrische Batterie (12) zum Antrieb einer elektrischen Maschine (13) umfasst, **dadurch gekennzeichnet, dass** es ein Wärmepumpensystem (20) umfasst, das einen Verdampfer (22), einen ersten Kondensator (24), der sich an der Vorderseite des Fahrzeugs befindet, einen zweiten Kondensator (26) zum Beheizen des Innenraums (H) des Fahrzeugs, einen Verdichter (28), einen Wasser/Kühlmittel-Tauscher (32) und ein Kälte- oder Kühlfluid, das diese Komponenten durchläuft, das in einer Kühlmittelschleife strömt, die den Verdampfer (22), die Kondensatoren (24, 26), den Verdichter (28) und den Wasser/Kühlmittel-Tauscher (32) verbindet, aufweist, und dadurch, dass es zwei gesonderte Wasserschleifen (40, 42) umfasst, und zwar eine erste Wasserschleife (40), die bei einer ersten Temperatur arbeitet, die dazu bestimmt ist, die elektrische Batterie (12) zu kühlen, und eine zweite Wasserschleife (42), die bei einer zweiten Temperatur arbeitet, die dazu bestimmt ist, die elektrische Maschine (13) zu kühlen, wobei die erste Wasserschleife (40) einen ersten Wasserkühler (44), den Wasser/Kühlmittel-Tauscher (32), einen elektrischen Widerstand (48), die elektrische Batterie (12) und einen Lufterwärmer (56), der zwischen dem Verdampfer (22) und dem zweiten Kondensator (26) der Wärmepumpe (20) angeordnet ist, umfasst, und die zweite Wasserschleife (42) einen Wasserkühler (60) des Antriebsstrangs, die elektrische Maschine (13) und die Ladeeinrichtung (14) umfasst, wobei der Kühler (60) parallel zum ersten Kondensator (24) und zum ersten Wasserkühler (44) angeordnet ist.

## Claims

1. Method for operating a thermal control system (10) of an electric or hybrid motor vehicle, comprising at least one electric battery (12) for driving an electric machine (13), the thermal control system (10) comprising a system with a heat pump (20) having an evaporator (22), a first condenser (24) located at the front face of the vehicle, a second condenser (26) intended to heat the passenger compartment (H) of the vehicle, a compressor (28), a water/coolant heat exchanger (32) and a refrigerating fluid or coolant which passes through these components and circulates in a coolant loop connecting the evaporator (22), the condensers (24, 26), the compressor (28) and the water/coolant heat exchanger (32), the thermal control system (10) additionally comprising two separate water loops (40, 42), specifically a first water loop (40) operating at a first temperature intended to cool the electric battery (12) and a second water loop (42) operating at a second temperature intended to cool the electric machine (13), the first water loop (40) comprising a first water radiator (44), the water/coolant heat exchanger (32), an electrical resistance element (48), the electric battery (12) and a fan heater (56) disposed between the evaporator (22) and the second condenser (26) of the heat pump (20), and the second water loop (42) comprising a water radiator (60) of the drive train, the electric machine (13) and the charger (14), the radiator (60) being disposed parallel to the first condenser (24) and the first water radiator (44),
**characterized in that**, when the vehicle runs without having been previously plugged into an external source of electrical energy in order to recharge the battery (12), when the outside temperature is lower than a first threshold value (S1), when the battery (12) has a temperature lower than a fourth threshold value (S4) and when there is no risk of icing of the water radiator (40, 60), the heat coming from the drive train coupled to at least one of the water radiators (44, 60) for extracting the heat from the outside air is used to heat the passenger compartment of the vehicle via the heat pump (20).

2. Method according to Claim 1, wherein, when the vehicle is connected to an external source of electrical energy in order to recharge the battery (12), when the outside temperature is lower than the first threshold value (S1) and when the battery (12) is charging, the battery (12) is preheated by the electrical resistance element (48) and the heat from the charger (14).

3. Method according to Claim 2, wherein, when there is a need to heat the passenger compartment, the battery (12) is preheated by the electrical resistance element (48) and the heat from the charger (14), and the passenger compartment is heated by the fan heater by virtue of the heat from the charger and from the electrical resistance element.

4. Method according to Claim 1, wherein, when the vehicle is connected to an external source of electrical energy in order to recharge the battery (12), when the outside temperature is lower than the first threshold value (S1) and when the battery (12) is charged, the battery (12) is heated solely by the electrical resistance element (48) .

5. Method according to Claim 4, wherein, when there is a need to heat the passenger compartment, the battery (12) is heated solely by the electrical resistance element (48) and the passenger compartment (H) is heated by the fan heater (56) using the heat from the electrical resistance element.

6. Method according to Claim 4 or 5, when the temperature of the battery is higher than a second threshold value (S2), the passenger compartment (H) of the vehicle is heated by the fan heater (56) and the resistance element (48), the battery then no longer being heated.

7. Method according to Claim 1, wherein, when the vehicle is running, when the outside temperature is lower than the first threshold value (S1), when the temperature of the battery (12) is higher than a fourth threshold value (S4) and when there is a need to heat the passenger compartment of the vehicle, the passenger compartment is heated by the heat pump by using the heat stored in the battery (12) and in the drive train.

8. Method according to Claim 7, wherein the passenger compartment is heated by the heat pump (20) and the fan heater (56) by using the heat stored in the battery (12) and in the drive train.

9. Method according to Claim 1, wherein, when the vehicle is running, when the outside temperature is higher than a sixth threshold value (S6), when the temperature of the battery (12) is lower than the fourth threshold value (S4) and when there is a need to heat the passenger compartment of the vehicle, the passenger compartment is heated by the fan heater (56) by using the heat from the drive train.

10. Method according to Claim 9, wherein, when the outside temperature (Text) is lower than a third threshold value (S3) and when there is no need to cool the passenger compartment of the vehicle, the battery (12) and the components of the drive train are cooled by the two separate water loops (40, 42) with their dedicated water radiator (44, 60).

11. Method according to Claim 1, wherein, when the vehicle is connected to an external source of electrical energy in order to recharge the battery (12), when the outside temperature is higher than a fifth threshold value (S5) and when the battery is charged, the battery (12) is cooled by the heat exchanger (32) and the charger (14) is cooled by the radiator 60 of the drive train.

12. Method according to Claim 11, wherein, when there is a need to cool the passenger compartment, the battery (12) is cooled by the heat exchanger (32) and the charger (14) is cooled by the radiator (60) of the drive train and the passenger compartment of the vehicle is cooled by the heat pump (20).

13. Method according to Claim 1, wherein, when the vehicle is running, when the outside temperature is higher than a fifth threshold value (S5), the battery (12) is cooled by the heat exchanger (32), the charger (14) is cooled by the radiator (60) of the drive train and the passenger compartment of the vehicle is cooled by the heat pump (20).

14. Thermal control system (10) of an electric or hybrid motor vehicle, comprising at least one electric battery (12) for driving an electric machine (13), **characterized in that** it comprises a system with a heat pump (20) having an evaporator (22), a first condenser (24) located at the front face of the vehicle, a second condenser (26) intended to heat the passenger compartment (H) of the vehicle, a compressor (28), a water/coolant heat exchanger (32) and a refrigerating fluid or coolant which passes through these components and circulates in a coolant loop connecting the evaporator (22), the condensers (24, 26), the compressor (28) and the water/coolant heat exchanger (32), and **in that** it comprises two separate water loops (40, 42), specifically a first water loop (40) operating at a first temperature intended to cool the electric battery (12) and a second water loop (42) operating at a second temperature intended to cool the electric machine (13), the first water loop (40) comprising a first water radiator (44), the water/coolant heat exchanger (32), an electrical resistance element (48), the electric battery (12) and a fan heater (56) disposed between the evaporator (22) and the second condenser (26) of the heat pump (20), and the second water loop (42) comprising a water radiator (60) of the drive train, the electric machine (13) and the charger (14), the radiator (60) being disposed parallel to the first condenser (24) and the first water radiator (44) .
